# EUROPEAN PATENT SPECIFICATION

(11) **EP 3 757 784 B1**
(45) Date of publication and mention of the grant of the patent: **25.10.2023**
(21) Application number: 20165317.7
(22) Date of filing: 24.03.2020
(51) Int. Cl.: G06F 9/48, G06F 9/50

(54) **TECHNOLOGIES FOR MANAGING ACCELERATOR RESOURCES**
TECHNOLOGIEN ZUR VERWALTUNG VON BESCHLEUNIGERRESSOURCEN
TECHNOLOGIES POUR GÉRER DES RESSOURCES D'ACCÉLÉRATEUR

(30) Priority: 28.06.2019 US 201916456956
(43) Date of publication of application: 30.12.2020
(73) Proprietor: Intel Corporation, Santa Clara, CA 95054 (US)
(72) Inventor: GUIM BERNAT, Francesc, 08036 Barcelona (ES); BALLE, Susanne M., Hudson, NH 03051 (US); PUTYRSKI, Slawomir, 81-572 Gdynia (PL); SEN, Sujoy, Beaverton, OR 97007 (US); CUSTODIO, Evan, North Attleboro, MA 02760 (US); DORMITZER, Paul, Acton, MA 01720 (US)
(74) Representative: 2SPL Patentanwälte PartG mbB

(56) References cited:
- US-A1- 2012 054 770
- US-A1- 2019 065 281
- LAMA PALDEN ET AL: "pVOCL: Power-Aware Dynamic Placement and Migration in Virtualized GPU Environments", PROCEEDINGS OF THE INTERNATIONAL CONFERENCE ON DISTRIBUTED COMPUTING SYSTEMS, IEEE COMPUTER SOCIETY, US, 8 July 2013 (2013-07-08), pages 145-154, XP032529361, ISSN: 1063-6927, DOI: 10.1109/ICDCS.2013.51 [retrieved on 2013-12-10]
- SHUCAI XIAO ET AL: "Transparent Accelerator Migration in a Virtualized GPU Environment", CLUSTER, CLOUD AND GRID COMPUTING (CCGRID), 2012 12TH IEEE/ACM INTERNATIONAL SYMPOSIUM ON, IEEE, 13 May 2012 (2012-05-13), pages 124-131, XP032186520, DOI: 10.1109/CCGRID.2012.26 ISBN: 978-1-4673-1395-7

## Description

### BACKGROUND

Accelerator devices, such as field programmable gate arrays (FPGAs), may be configured (e.g., by a bit stream defining a configuration of gates of the FPGA) to perform a set of functions, referred to herein as a kernel. The kernel may be configured, through time consuming effort on the part of a kernel developer, to establish a connection with another accelerator device kernel (e.g., another kernel in the same FPGA, a kernel in another FPGA, or a kernel of another type of accelerator device, such as a graphics processing unit (GPU), etc.) and share data with that other kernel to facilitate the completion of a workload (e.g., a set of operations that are to be performed). Typically, details of the communication protocol must be set out in the kernel by the kernel developer and, as the primary purpose of the kernel is to perform a set of operations (e.g., the workload) as efficiently as possible, the communication aspect of the kernel may be limited to communicating with a single type of accelerator device kernel if that accelerator device kernel happens to be available on a certain type of physical communication path (e.g., a PCIe bus). While some data centers may utilize pools of disaggregated resources (e.g., accelerator devices) available through various types of physical communication paths, also referred to I/O channels or communication channels, a given accelerator device kernel may be unable to access (e.g., cooperatively execute a workload with) a large percentage of those other accelerator devices present in the data center due to the limited communication faculties of the accelerator device kernel.

US 2019/065281 discloses technologies for auto-migration in accelerated architecture. US 2019/065281 discloses that while hardware threads of an application are being executed by a processor, certain application functionality (e.g., compute kernels) may be offloaded to an FPGA. US 2019/065281 discloses that the orchestrator server may generate a map of heat generation in the data center using telemetry data (e.g., temperatures, fan speeds, etc.) reported from the sleds and allocate resources to managed nodes as a function of the map of heat generation and predicted heat generation associated with different workloads.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified diagram of at least one example of a data center for executing workloads with disaggregated resources;
FIG. 2 is a simplified diagram of at least one example of a pod that may be included in the data center of FIG. 1;
FIG. 3 is a perspective view of at least one example of a rack that may be included in the pod of FIG. 2;
FIG. 4 is a side elevation view of the rack of FIG. 3;
FIG. 5 is a perspective view of the rack of FIG. 3 having a sled mounted therein;
FIG. 6 is a is a simplified block diagram of at least one example of a top side of the sled of FIG. 5;
FIG. 7 is a simplified block diagram of at least one example of a bottom side of the sled of FIG. 6;
FIG. 8 is a simplified block diagram of at least one example of a compute sled usable in the data center of FIG. 1;
FIG. 9 is a top perspective view of at least one example of the compute sled of FIG. 8;
FIG. 10 is a simplified block diagram of at least one example of an accelerator sled usable in the data center of FIG. 1;
FIG. 11 is a top perspective view of at least one example of the accelerator sled of FIG. 10;
FIG. 12 is a simplified block diagram of at least one example of a storage sled usable in the data center of FIG. 1;
FIG. 13 is a top perspective view of at least one example of the storage sled of FIG. 12;
FIG. 14 is a simplified block diagram of at least one example of a memory sled usable in the data center of FIG. 1;
FIG. 15 is a simplified block diagram of a system that may be established within the data center of FIG. 1 to execute workloads with managed nodes composed of disaggregated resources;
FIG. 16 is a simplified diagram of at least one example of a system for managing accelerator resources;
FIG. 17 is a simplified block diagram of at least one example of a method for performing inline processing of an accelerator function that may be carried out by a network interface controller (NIC) of a compute device or an accelerator device of the system of FIG. 16;
FIGS. 18 and 19 are simplified block diagrams of a method for managing accelerator kernel heartbeats in the system of FIG. 16;
FIG. 20 is a simplified block diagram of a method for multicasting notifications of available accelerator resources in the system of FIG. 16;
FIGS. 21 and 22 are simplified block diagrams of a method for migrating an accelerated kernel workload to satisfy quality-of-service (QoS) requirements in the system of FIG. 16;
FIG. 23 is a simplified block diagram of a method for managing power consumption of accelerator resources using scale-out techniques in the system of FIG. 16;
FIG. 24 is a simplified block diagram of a method for managing workload placement in an accelerator sled in the system of FIG. 16;
FIG. 25 is a simplified block diagram of a method for provisioning accelerator functions with intermediate data via inter-kernel communication; and
FIG. 26 is a simplified block diagram of a method for scaling-out accelerator kernel resources to heterogeneous accelerator devices.

### DETAILED DESCRIPTION OF THE DRAWINGS

While the concepts of the present disclosure are susceptible to various modifications and alternative forms, specific embodiments thereof have been shown by way of example in the drawings and will be described herein in detail. The invention is defined by the claims, that define its embodiments.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

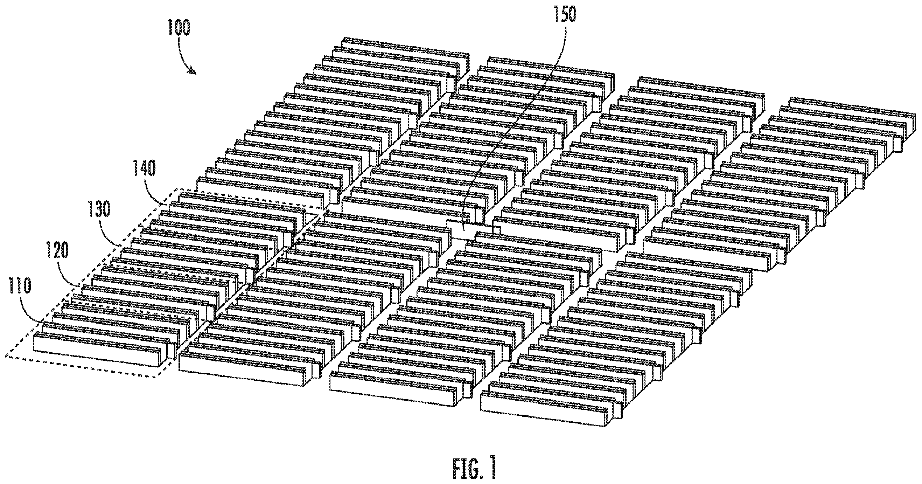

Referring now to FIG. 1, a data center 100 in which disaggregated resources may cooperatively execute one or more workloads (e.g., applications on behalf of customers) includes multiple pods 110, 120, 130, 140, each of which includes one or more rows of racks. Of course, although data center 100 is shown with multiple pods, in some examples, the data center 100 may be embodied as a single pod. As described in more detail herein, each rack houses multiple sleds, each of which may be primarily equipped with a particular type of resource (e.g., memory devices, data storage devices, accelerator devices, general purpose processors), i.e., resources that can be logically coupled to form a composed node, which can act as, for example, a server. In the illustrative example, the sleds in each pod 110, 120, 130, 140 are connected to multiple pod switches (e.g., switches that route data communications to and from sleds within the pod). The pod switches, in turn, connect with spine switches 150 that switch communications among pods (e.g., the pods 110, 120, 130, 140) in the data center 100. In some examples, the sleds may be connected with a fabric using Intel Omni-Path technology. In other examples, the sleds may be connected with other fabrics, such as InfiniBand or Ethernet As described in more detail herein, resources within sleds in the data center 100 may be allocated to a group (referred to herein as a "managed node") containing resources from one or more sleds to be collectively utilized in the execution of a workload. The workload can execute as if the resources belonging to the managed node were located on the same sled. The resources in a managed node may belong to sleds belonging to different racks, and even to different pods 110, 120, 130, 140. As such, some resources of a single sled may be allocated to one managed node while other resources of the same sled are allocated to a different managed node (e.g., one processor assigned to one managed node and another processor of the same sled assigned to a different managed node).

A data center comprising disaggregated resources, such as data center 100, can be used in a wide variety of contexts, such as enterprise, government, cloud service provider, and communications service provider (e.g., Telco's), as well in a wide variety of sizes, from cloud service provider mega-data centers that consume over 100,000 sq. ft. to single- or multi-rack installations for use in base stations.

The disaggregation of resources to sleds comprised predominantly of a single type of resource (e.g., compute sleds comprising primarily compute resources, memory sleds containing primarily memory resources), and the selective allocation and deallocation of the disaggregated resources to form a managed node assigned to execute a workload improves the operation and resource usage of the data center 100 relative to typical data centers comprised of hyperconverged servers containing compute, memory, storage and perhaps additional resources in a single chassis. For example, because sleds predominantly contain resources of a particular type, resources of a given type can be upgraded independently of other resources. Additionally, because different resources types (processors, storage, accelerators, etc.) typically have different refresh rates, greater resource utilization and reduced total cost of ownership may be achieved. For example, a data center operator can upgrade the processors throughout their facility by only swapping out the compute sleds. In such a case, accelerator and storage resources may not be contemporaneously upgraded and, rather, may be allowed to continue operating until those resources are scheduled for their own refresh. Resource utilization may also increase. For example, if managed nodes are composed based on requirements of the workloads that will be running on them, resources within a node are more likely to be fully utilized. Such utilization may allow for more managed nodes to run in a data center with a given set of resources, or for a data center expected to run a given set of workloads, to be built using fewer resources.

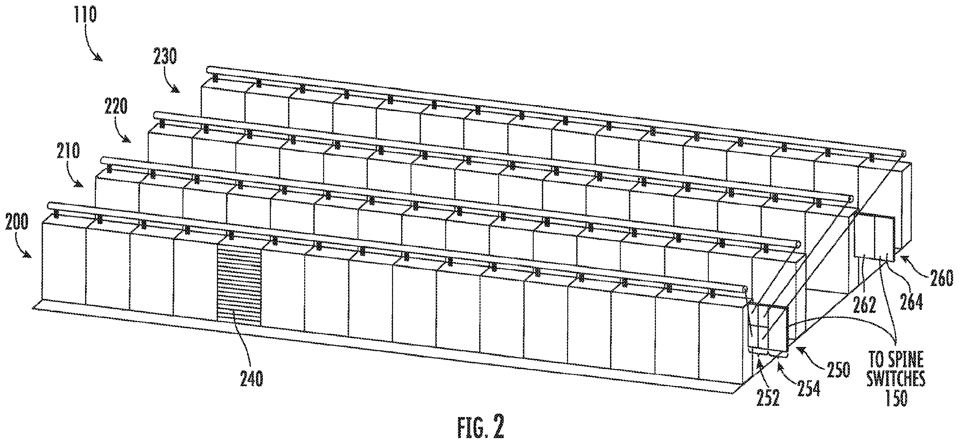

Referring now to FIG. 2, the pod 110, in the illustrative example, includes a set of rows 200, 210, 220, 230 of racks 240. Each rack 240 may house multiple sleds (e.g., sixteen sleds) and provide power and data connections to the housed sleds, as described in more detail herein. In the illustrative example, the racks in each row 200, 210, 220, 230 are connected to multiple pod switches 250, 260. The pod switch 250 includes a set of ports 252 to which the sleds of the racks of the pod 110 are connected and another set of ports 254 that connect the pod 110 to the spine switches 150 to provide connectivity to other pods in the data center 100. Similarly, the pod switch 260 includes a set of ports 262 to which the sleds of the racks of the pod 110 are connected and a set of ports 264 that connect the pod 110 to the spine switches 150. As such, the use of the pair of switches 250, 260 provides an amount of redundancy to the pod 110. For example, if either of the switches 250, 260 fails, the sleds in the pod 110 may still maintain data communication with the remainder of the data center 100 (e.g., sleds of other pods) through the other switch 250, 260. Furthermore, in the illustrative example, the switches 150, 250, 260 may be embodied as dual-mode optical switches, capable of routing both Ethernet protocol communications carrying Internet Protocol (IP) packets and communications according to a second, high-performance link-layer protocol (e.g., Intel's Omni-Path Architecture's, InfiniBand, PCI Express) via optical signaling media of an optical fabric.

It should be appreciated that each of the other pods 120, 130, 140 (as well as any additional pods of the data center 100) may be similarly structured as, and have components similar to, the pod 110 shown in and described in regard to FIG. 2 (e.g., each pod may have rows of racks housing multiple sleds as described above). Additionally, while two pod switches 250, 260 are shown, it should be understood that in other examples, each pod 110, 120, 130, 140 may be connected to a different number of pod switches, providing even more failover capacity. Of course, in other examples, pods may be arranged differently than the rows-of-racks configuration shown in FIGS. 1-2. For example, a pod may be embodied as multiple sets of racks in which each set of racks is arranged radially, i.e., the racks are equidistant from a center switch.

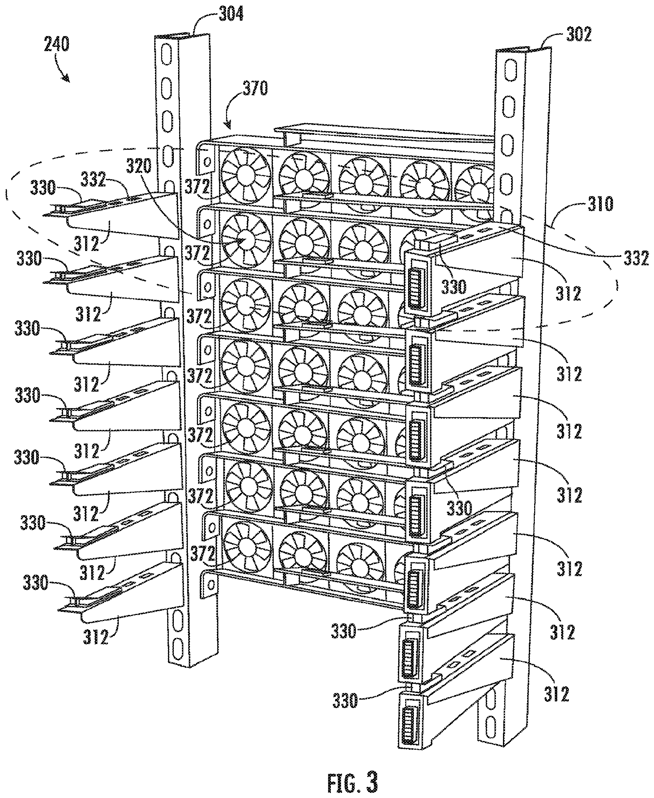

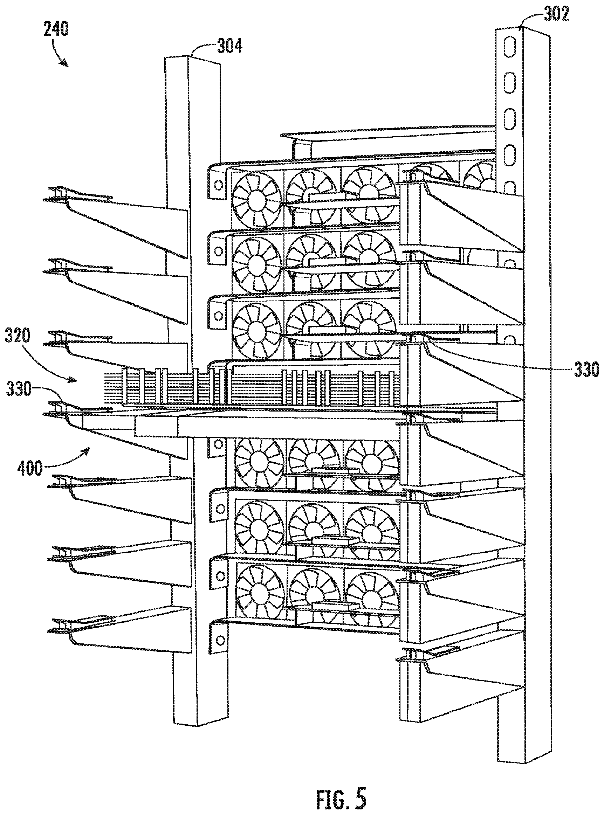

Referring now to FIGS. 3-5, each illustrative rack 240 of the data center 100 includes two elongated support posts 302, 304, which are arranged vertically. For example, the elongated support posts 302, 304 may extend upwardly from a floor of the data center 100 when deployed. The rack 240 also includes one or more horizontal pairs 310 of elongated support arms 312 (identified in FIG. 3 via a dashed ellipse) configured to support a sled of the data center 100 as discussed below. One elongated support arm 312 of the pair of elongated support arms 312 extends outwardly from the elongated support post 302 and the other elongated support arm 312 extends outwardly from the elongated support post 304.

In the illustrative examples, each sled of the data center 100 is embodied as a chassis-less sled. That is, each sled has a chassis-less circuit board substrate on which physical resources (e.g., processors, memory, accelerators, storage, etc.) are mounted as discussed in more detail below. As such, the rack 240 is configured to receive the chassis-less sleds. For example, each pair 310 of elongated support arms 312 defines a sled slot 320 of the rack 240, which is configured to receive a corresponding chassis-less sled. To do so, each illustrative elongated support arm 312 includes a circuit board guide 330 configured to receive the chassis-less circuit board substrate of the sled. Each circuit board guide 330 is secured to, or otherwise mounted to, a top side 332 of the corresponding elongated support arm 312. For example, in the illustrative example, each circuit board guide 330 is mounted at a distal end of the corresponding elongated support arm 312 relative to the corresponding elongated support post 302, 304. For clarity of the Figures, not every circuit board guide 330 may be referenced in each Figure.

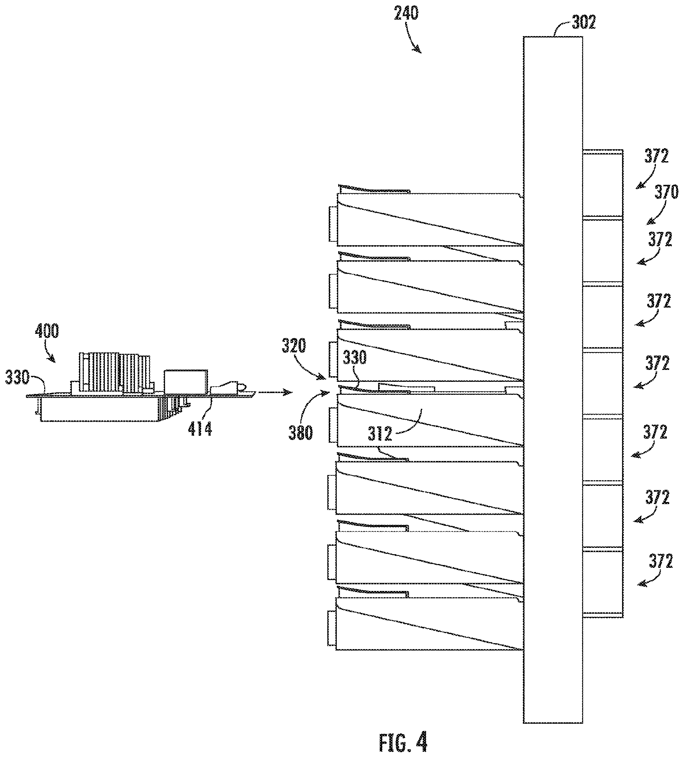

Each circuit board guide 330 includes an inner wall that defines a circuit board slot 380 configured to receive the chassis-less circuit board substrate of a sled 400 when the sled 400 is received in the corresponding sled slot 320 of the rack 240. To do so, as shown in FIG. 4, a user (or robot) aligns the chassis-less circuit board substrate of an illustrative chassis-less sled 400 to a sled slot 320. The user, or robot, may then slide the chassis-less circuit board substrate forward into the sled slot 320 such that each side edge 414 of the chassis-less circuit board substrate is received in a corresponding circuit board slot 380 of the circuit board guides 330 of the pair 310 of elongated support arms 312 that define the corresponding sled slot 320 as shown in FIG. 4. By having robotically accessible and robotically manipulable sleds comprising disaggregated resources, each type of resource can be upgraded independently of each other and at their own optimized refresh rate. Furthermore, the sleds are configured to blindly mate with power and data communication cables in each rack 240, enhancing their ability to be quickly removed, upgraded, reinstalled, and/or replaced. As such, in some examples, the data center 100 may operate (e.g., execute workloads, undergo maintenance and/or upgrades, etc.) without human involvement on the data center floor. In other examples, a human may facilitate one or more maintenance or upgrade operations in the data center 100.

It should be appreciated that each circuit board guide 330 is dual sided. That is, each circuit board guide 330 includes an inner wall that defines a circuit board slot 380 on each side of the circuit board guide 330. In this way, each circuit board guide 330 can support a chassis-less circuit board substrate on either side. As such, a single additional elongated support post may be added to the rack 240 to turn the rack 240 into a two-rack solution that can hold twice as many sled slots 320 as shown in Fig. 3. The illustrative rack 240 includes seven pairs 310 of elongated support arms 312 that define a corresponding seven sled slots 320, each configured to receive and support a corresponding sled 400 as discussed above. Of course, in other examples, the rack 240 may include additional or fewer pairs 310 of elongated support arms 312 (i.e., additional or fewer sled slots 320). It should be appreciated that because the sled 400 is chassis-less, the sled 400 may have an overall height that is different than typical servers. As such, in some examples, the height of each sled slot 320 may be shorter than the height of a typical server (e.g., shorter than a single rank unit, "1U"). That is, the vertical distance between each pair 310 of elongated support arms 312 may be less than a standard rack unit "1U." Additionally, due to the relative decrease in height of the sled slots 320, the overall height of the rack 240 in some examples may be shorter than the height of traditional rack enclosures. For example, in some examples, each of the elongated support posts 302, 304 may have a length of six feet or less. Again, in other examples, the rack 240 may have different dimensions. For example, in some examples, the vertical distance between each pair 310 of elongated support arms 312 may be greater than a standard rack until "1U". In such examples, the increased vertical distance between the sleds allows for larger heat sinks to be attached to the physical resources and for larger fans to be used (e.g., in the fan array 370 described below) for cooling each sled, which in turn can allow the physical resources to operate at increased power levels. Further, it should be appreciated that the rack 240 does not include any walls, enclosures, or the like. Rather, the rack 240 is an enclosure-less rack that is opened to the local environment. Of course, in some cases, an end plate may be attached to one of the elongated support posts 302, 304 in those situations in which the rack 240 forms an end-of-row rack in the data center 100.

In some examples, various interconnects may be routed upwardly or downwardly through the elongated support posts 302, 304. To facilitate such routing, each elongated support post 302, 304 includes an inner wall that defines an inner chamber in which interconnects may be located. The interconnects routed through the elongated support posts 302, 304 may be embodied as any type of interconnects including, but not limited to, data or communication interconnects to provide communication connections to each sled slot 320, power interconnects to provide power to each sled slot 320, and/or other types of interconnects.

The rack 240, in the illustrative example, includes a support platform on which a corresponding optical data connector (not shown) is mounted. Each optical data connector is associated with a corresponding sled slot 320 and is configured to mate with an optical data connector of a corresponding sled 400 when the sled 400 is received in the corresponding sled slot 320. In some examples, optical connections between components (e.g., sleds, racks, and switches) in the data center 100 are made with a blind mate optical connection. For example, a door on each cable may prevent dust from contaminating the fiber inside the cable. In the process of connecting to a blind mate optical connector mechanism, the door is pushed open when the end of the cable approaches or enters the connector mechanism. Subsequently, the optical fiber inside the cable may enter a gel within the connector mechanism and the optical fiber of one cable comes into contact with the optical fiber of another cable within the gel inside the connector mechanism.

The illustrative rack 240 also includes a fan array 370 coupled to the cross-support arms of the rack 240. The fan array 370 includes one or more rows of cooling fans 372, which are aligned in a horizontal line between the elongated support posts 302, 304. In the illustrative example, the fan array 370 includes a row of cooling fans 372 for each sled slot 320 of the rack 240. As discussed above, each sled 400 does not include any on-board cooling system in the illustrative example and, as such, the fan array 370 provides cooling for each sled 400 received in the rack 240. Each rack 240, in the illustrative example, also includes a power supply associated with each sled slot 320. Each power supply is secured to one of the elongated support arms 312 of the pair 310 of elongated support arms 312 that define the corresponding sled slot 320. For example, the rack 240 may include a power supply coupled or secured to each elongated support arm 312 extending from the elongated support post 302. Each power supply includes a power connector configured to mate with a power connector of the sled 400 when the sled 400 is received in the corresponding sled slot 320. In the illustrative example, the sled 400 does not include any on-board power supply and, as such, the powe supplies provided in the rack 240 supply power to corresponding sleds 400 when mounted to the rack 240. Each power supply is configured to satisfy the power requirements for its associated sled, which can vary from sled to sled. Additionally, the power supplies provided in the rack 240 can operate independent of each other. That is, within a single rack, a first power supply providing power to a compute sled can provide power levels that are different than power levels supplied by a second power supply providing power to an accelerator sled. The power supplies may be controllable at the sled level or rack level, and may be controlled locally by components on the associated sled or remotely, such as by another sled or an orchestrator.

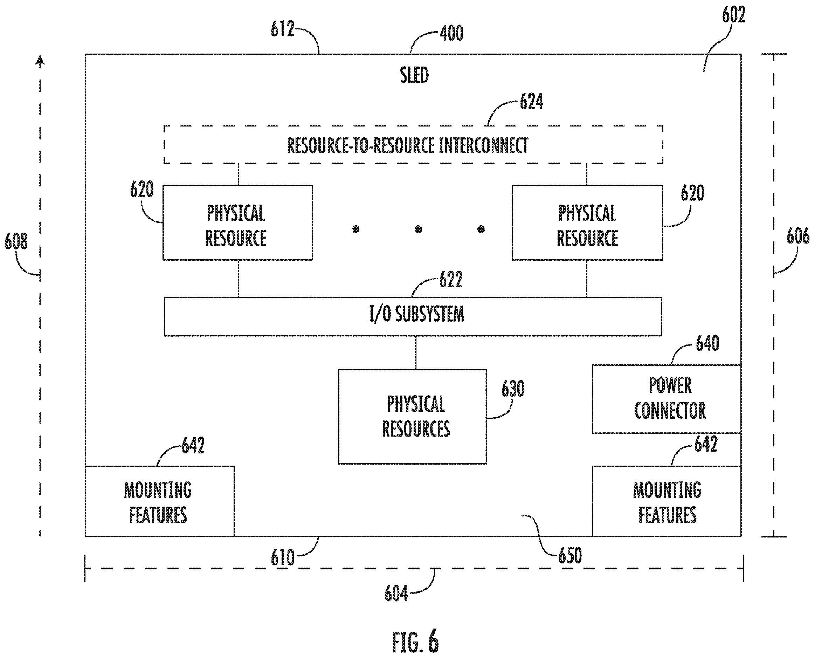

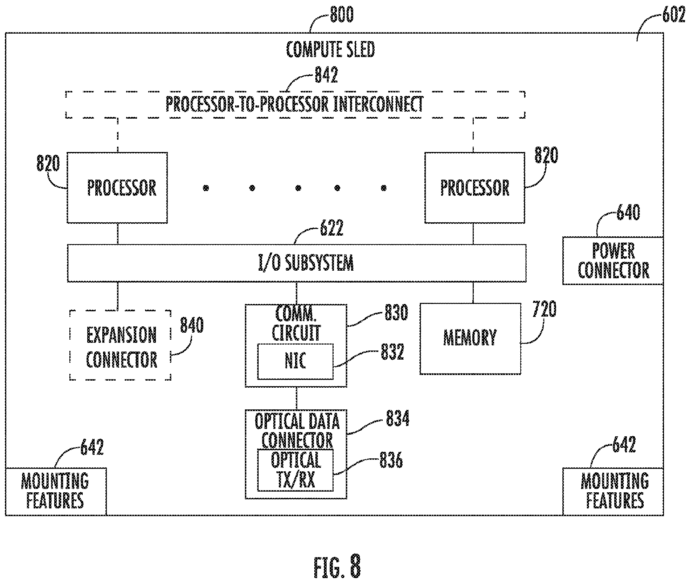

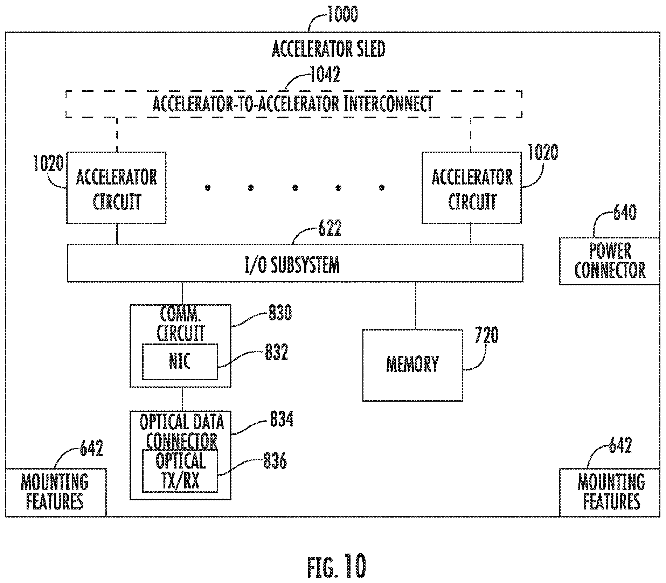

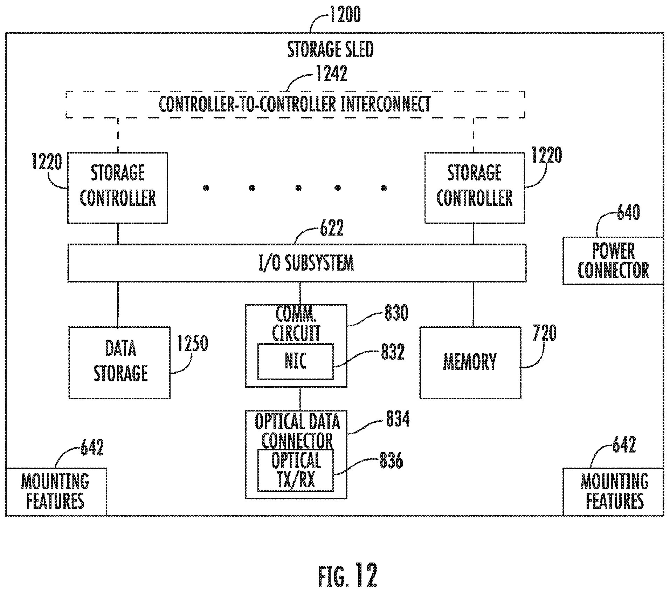

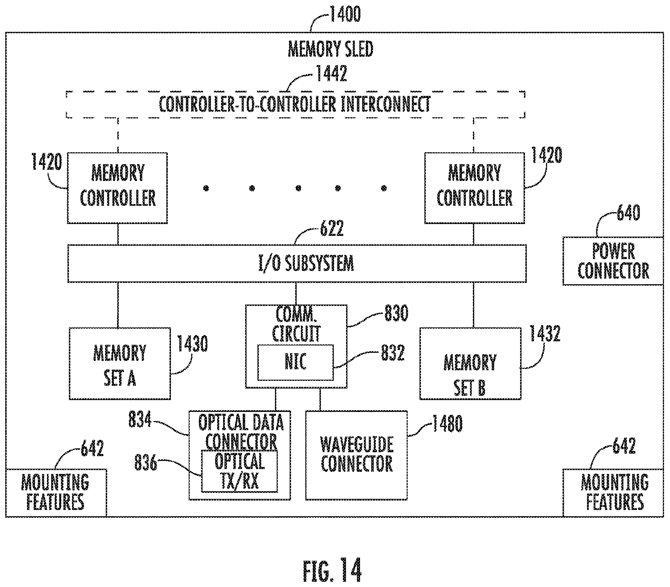

Referring now to FIG. 6, the sled 400, in the illustrative example, is configured to be mounted in a corresponding rack 240 of the data center 100 as discussed above. In some examples, each sled 400 may be optimized or otherwise configured for performing particular tasks, such as compute tasks, acceleration tasks, data storage tasks, etc. For example, the sled 400 may be embodied as a compute sled 800 as discussed below in regard to FIGS. 8-9, an accelerator sled 1000 as discussed below in regard to FIGS. 10-11, a storage sled 1200 as discussed below in regard to FIGS. 12-13, or as a sled optimized or otherwise configured to perform other specialized tasks, such as a memory sled 1400, discussed below in regard to FIG. 14.

As discussed above, the illustrative sled 400 includes a chassis-less circuit board substrate 602, which supports various physical resources (e.g., electrical components) mounted thereon. It should be appreciated that the circuit board substrate 602 is "chassis-less" in that the sled 400 does not include a housing or enclosure. Rather, the chassis-less circuit board substrate 602 is open to the local environment. The chassis-less circuit board substrate 602 may be formed from any material capable of supporting the various electrical components mounted thereon. For example, in an illustrative example, the chassis-less circuit board substrate 602 is formed from an FR-4 glass-reinforced epoxy laminate material. Of course, other materials may be used to form the chassis-less circuit board substrate 602 in other examples.

As discussed in more detail below, the chassis-less circuit board substrate 602 includes multiple features that improve the thermal cooling characteristics of the various electrical components mounted on the chassis-less circuit board substrate 602. As discussed, the chassis-less circuit board substrate 602 does not include a housing or enclosure, which may improve the airflow over the electrical components of the sled 400 by reducing those structures that may inhibit air flow. For example, because the chassis-less circuit board substrate 602 is not positioned in an individual housing or enclosure, there is no vertically-arranged backplane (e.g., a backplate of the chassis) attached to the chassis-less circuit board substrate 602, which could inhibit air flow across the electrical components. Additionally, the chassis-less circuit board substrate 602 has a geometric shape configured to reduce the length of the airflow path across the electrical components mounted to the chassis-less circuit board substrate 602. For example, the illustrative chassis-less circuit board substrate 602 has a width 604 that is greater than a depth 606 of the chassis-less circuit board substrate 602. In one particular example, for example, the chassis-less circuit board substrate 602 has a width of about 21 inches and a depth of about 9 inches, compared to a typical server that has a width of about 17 inches and a depth of about 39 inches. As such, an airflow path 608 that extends from a front edge 610 of the chassis-less circuit board substrate 602 toward a rear edge 612 has a shorter distance relative to typical servers, which may improve the thermal cooling characteristics of the sled 400. Furthermore, although not illustrated in FIG. 6, the various physical resources mounted to the chassis-less circuit board substrate 602 are mounted in corresponding locations such that no two substantively heat-producing electrical components shadow each other as discussed in more detail below. That is, no two electrical components, which produce appreciable heat during operation (i.e., greater than a nominal heat sufficient enough to adversely impact the cooling of another electrical component), are mounted to the chassis-less circuit board substrate 602 linearly in-line with each other along the direction of the airflow path 608 (i.e., along a direction extending from the front edge 610 toward the rear edge 612 of the chassis-less circuit board substrate 602).

As discussed above, the illustrative sled 400 includes one or more physical resources 620 mounted to a top side 650 of the chassis-less circuit board substrate 602. Although two physical resources 620 are shown in FIG. 6, it should be appreciated that the sled 400 may include one, two, or more physical resources 620 in other examples. The physical resources 620 may be embodied as any type of processor, controller, or other compute circuit capable of performing various tasks such as compute functions and/or controlling the functions of the sled 400 depending on, for example, the type or intended functionality of the sled 400. For example, as discussed in more detail below, the physical resources 620 may be embodied as high-performance processors in examples in which the sled 400 is embodied as a compute sled, as accelerator co-processors or circuits in examples in which the sled 400 is embodied as an accelerator sled, storage controllers in examples in which the sled 400 is embodied as a storage sled, or a set of memory devices in examples in which the sled 400 is embodied as a memory sled.

The sled 400 also includes one or more additional physical resources 630 mounted to the top side 650 of the chassis-less circuit board substrate 602. In the illustrative example, the additional physical resources include a network interface controller (NIC) as discussed in more detail below. Of course, depending on the type and functionality of the sled 400, the physical resources 630 may include additional or other electrical components, circuits, and/or devices in other examples.

The physical resources 620 are communicatively coupled to the physical resources 630 via an input/output (I/O) subsystem 622. The I/O subsystem 622 may be embodied as circuitry and/or components to facilitate input/output operations with the physical resources 620, the physical resources 630, and/or other components of the sled 400. For example, the I/O subsystem 622 may be embodied as, or otherwise include, memory controller hubs, input/output control hubs, integrated sensor hubs, firmware devices, communication links (e.g., point-to-point links, bus links, wires, cables, waveguides, light guides, printed circuit board traces, etc.), and/or other components and subsystems to facilitate the input/output operations. In the illustrative example, the I/O subsystem 622 is embodied as, or otherwise includes, a double data rate 4 (DDR4) data bus or a DDR5 data bus.

In some examples, the sled 400 may also include a resource-to-resource interconnect 624. The resource-to-resource interconnect 624 may be embodied as any type of communication interconnect capable of facilitating resource-to-resource communications. In the illustrative example, the resource-to-resource interconnect 624 is embodied as a high-speed point-to-point interconnect (e.g., faster than the I/O subsystem 622). For example, the resource-to-resource interconnect 624 may be embodied as a QuickPath Interconnect (QPI), an UltraPath Interconnect (UPI), or other high-speed point-to-point interconnect dedicated to resource-to-resource communications.

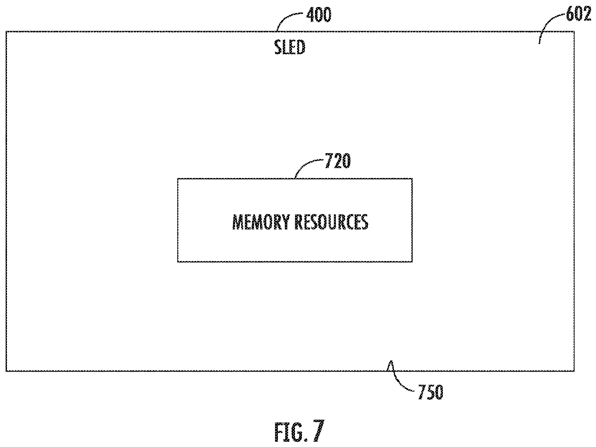

The sled 400 also includes a power connector 640 configured to mate with a corresponding power connector of the rack 240 when the sled 400 is mounted in the corresponding rack 240. The sled 400 receives power from a power supply of the rack 240 via the power connector 640 to supply power to the various electrical components of the sled 400. That is, the sled 400 does not include any local power supply (i.e., an on-board power supply) to provide power to the electrical components of the sled 400. The exclusion of a local or on-board power supply facilitates the reduction in the overall footprint of the chassis-less circuit board substrate 602, which may increase the thermal cooling characteristics of the various electrical components mounted on the chassis-less circuit board substrate 602 as discussed above. In some examples, voltage regulators are placed on a bottom side 750 (see FIG. 7) of the chassis-less circuit board substrate 602 directly opposite of the processors 820 (see FIG. 8), and power is routed from the voltage regulators to the processors 820 by vias extending through the circuit board substrate 602. Such a configuration provides an increased thermal budget, additional current and/or voltage, and better voltage control relative to typical printed circuit boards in which processor power is delivered from a voltage regulator, in part, by printed circuit traces.

In some examples, the sled 400 may also include mounting features 642 configured to mate with a mounting arm, or other structure, of a robot to facilitate the placement of the sled 600 in a rack 240 by the robot. The mounting features 642 may be embodied as any type of physical structures that allow the robot to grasp the sled 400 without damaging the chassis-less circuit board substrate 602 or the electrical components mounted thereto. For example, in some examples, the mounting features 642 may be embodied as non-conductive pads attached to the chassis-less circuit board substrate 602. In other examples, the mounting features may be embodied as brackets, braces, or other similar structures attached to the chassis-less circuit board substrate 602. The particular number, shape, size, and/or make-up of the mounting feature 642 may depend on the design of the robot configured to manage the sled 400.

Referring now to FIG. 7, in addition to the physical resources 630 mounted on the top side 650 of the chassis-less circuit board substrate 602, the sled 400 also includes one or more memory devices 720 mounted to a bottom side 750 of the chassis-less circuit board substrate 602. That is, the chassis-less circuit board substrate 602 is embodied as a double-sided circuit board. The physical resources 620 are communicatively coupled to the memory devices 720 via the I/O subsystem 622. For example, the physical resources 620 and the memory devices 720 may be communicatively coupled by one or more vias extending through the chassis-less circuit board substrate 602. Each physical resource 620 may be communicatively coupled to a different set of one or more memory devices 720 in some examples. Alternatively, in other examples, each physical resource 620 may be communicatively coupled to each memory device 720.

The memory devices 720 may be embodied as any type of memory device capable of storing data for the physical resources 620 during operation of the sled 400, such as any type of volatile (e.g., dynamic random access memory (DRAM), etc.) or non-volatile memory. Volatile memory may be a storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular examples, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces.

In one example, the memory device is a block addressable memory device, such as those based on NAND or NOR technologies. A memory device may also include next-generation nonvolatile devices, such as Intel 3D XPoint^{™} memory or other byte addressable write-in-place nonvolatile memory devices. In one example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product. In some examples, the memory device may comprise a transistor-less stackable cross point architecture in which memory cells sit at the intersection of word lines and bit lines and are individually addressable and in which bit storage is based on a change in bulk resistance.

Referring now to FIG. 8, in some examples, the sled 400 may be embodied as a compute sled 800. The compute sled 800 is optimized, or otherwise configured, to perform compute tasks. Of course, as discussed above, the compute sled 800 may rely on other sleds, such as acceleration sleds and/or storage sleds, to perform such compute tasks. The compute sled 800 includes various physical resources (e.g., electrical components) similar to the physical resources of the sled 400, which have been identified in FIG. 8 using the same reference numbers. The description of such components provided above in regard to FIGS. 6 and 7 applies to the corresponding components of the compute sled 800 and is not repeated herein for clarity of the description of the compute sled 800.

In the illustrative compute sled 800, the physical resources 620 are embodied as processors 820. Although only two processors 820 are shown in FIG. 8, it should be appreciated that the compute sled 800 may include additional processors 820 in other examples, Illustratively, the processors 820 are embodied as high-performance processors 820 and may be configured to operate at a relatively high power rating. Although the processors 820 generate additional heat operating at power ratings greater than typical processors (which operate at around 155-230 W), the enhanced thermal cooling characteristics of the chassis-less circuit board substrate 602 discussed above facilitate the higher power operation. For example, in the illustrative example, the processors 820 are configured to operate at a power rating of at least 250 W. In some examples, the processors 820 may be configured to operate at a power rating of at least 350 W.

In some examples, the compute sled 800 may also include a processor-to-processor interconnect 842. Similar to the resource-to-resource interconnect 624 of the sled 400 discussed above, the processor-to-processor interconnect 842 may be embodied as any type of communication interconnect capable of facilitating processor-to-processor interconnect 842 communications. In the illustrative example, the processor-to-processor interconnect 842 is embodied as a high-speed point-to-point interconnect (e.g., faster than the I/O subsystem 622). For example, the processor-to-processor interconnect 842 may be embodied as a QuickPath Interconnect (QPI), an UltraPath Interconnect (UPI), or other high-speed point-to-point interconnect dedicated to processor-to-processor communications.

The compute sled 800 also includes a communication circuit 830. The illustrative communication circuit 830 includes a network interface controller (NIC) 832, which may also be referred to as a host fabric interface (HFI). The NIC 832 may be embodied as, or otherwise include, any type of integrated circuit, discrete circuits, controller chips, chipsets, add-in-boards, daughtercards, network interface cards, or other devices that may be used by the compute sled 800 to connect with another compute device (e.g., with other sleds 400). In some examples, the NIC 832 may be embodied as part of a system-on-a-chip (SoC) that includes one or more processors, or included on a multichip package that also contains one or more processors. In some examples, the NIC 832 may include a local processor (not shown) and/or a local memory (not shown) that are both local to the NIC 832. In such examples, the local processor of the NIC 832 may be capable of performing one or more of the functions of the processors 820. Additionally or alternatively, in such examples, the local memory of the NIC 832 may be integrated into one or more components of the compute sled at the board level, socket level, chip level, and/or other levels.

The communication circuit 830 is communicatively coupled to an optical data connector 834. The optical data connector 834 is configured to mate with a corresponding optical data connector of the rack 240 when the compute sled 800 is mounted in the rack 240. Illustratively, the optical data connector 834 includes a plurality of optical fibers which lead from a mating surface of the optical data connector 834 to an optical transceiver 836. The optical transceiver 836 is configured to convert incoming optical signals from the rack-side optical data connector to electrical signals and to convert electrical signals to outgoing optical signals to the rack-side optical data connector. Although shown as forming part of the optical data connector 834 in the illustrative example, the optical transceiver 836 may form a portion of the communication circuit 830 in other examples.

In some examples, the compute sled 800 may also include an expansion connector 840. In such examples, the expansion connector 840 is configured to mate with a corresponding connector of an expansion chassis-less circuit board substrate to provide additional physical resources to the compute sled 800. The additional physical resources may be used, for example, by the processors 820 during operation of the compute sled 800. The expansion chassis-less circuit board substrate may be substantially similar to the chassis-less circuit board substrate 602 discussed above and may include various electrical components mounted thereto. The particular electrical components mounted to the expansion chassis-less circuit board substrate may depend on the intended functionality of the expansion chassis-less circuit board substrate. For example, the expansion chassis-less circuit board substrate may provide additional compute resources, memory resources, and/or storage resources. As such, the additional physical resources of the expansion chassis-less circuit board substrate may include, but is not limited to, processors, memory devices, storage devices, and/or accelerator circuits including, for example, field programmable gate arrays (FPGA), application-specific integrated circuits (ASICs), security co-processors, graphics processing units (GPUs), machine learning circuits, or other specialized processors, controllers, devices, and/or circuits.

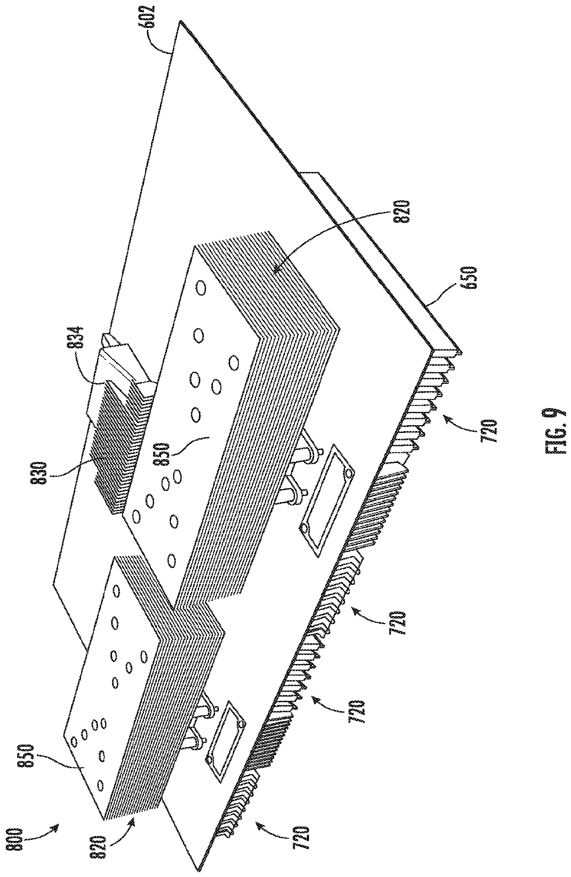

Referring now to FIG. 9, an illustrative example of the compute sled 800 is shown. As shown, the processors 820, communication circuit 830, and optical data connector 834 are mounted to the top side 650 of the chassis-less circuit board substrate 602. Any suitable attachment or mounting technology may be used to mount the physical resources of the compute sled 800 to the chassis-less circuit board substrate 602. For example, the various physical resources may be mounted in corresponding sockets (e.g., a processor socket), holders, or brackets. In some cases, some of the electrical components may be directly mounted to the chassis-less circuit board substrate 602 via soldering or similar techniques.

As discussed above, the individual processors 820 and communication circuit 830 are mounted to the top side 650 of the chassis-less circuit board substrate 602 such that no two heat-producing, electrical components shadow each other. In the illustrative example, the processors 820 and communication circuit 830 are mounted in corresponding locations on the top side 650 of the chassis-less circuit board substrate 602 such that no two of those physical resources are linearly in-line with others along the direction of the airflow path 608. It should be appreciated that, although the optical data connector 834 is in-line with the communication circuit 830, the optical data connector 834 produces no or nominal heat during operation.

The memory devices 720 of the compute sled 800 are mounted to the bottom side 750 of the of the chassis-less circuit board substrate 602 as discussed above in regard to the sled 400. Although mounted to the bottom side 750, the memory devices 720 are communicatively coupled to the processors 820 located on the top side 650 via the I/O subsystem 622. Because the chassis-less circuit board substrate 602 is embodied as a double-sided circuit board, the memory devices 720 and the processors 820 may be communicatively coupled by one or more vias, connectors, or other mechanisms extending through the chassis-less circuit board substrate 602. Of course, each processor 820 may be communicatively coupled to a different set of one or more memory devices 720 in some examples. Alternatively, in other examples, each processor 820 may be communicatively coupled to each memory device 720. In some examples, the memory devices 720 may be mounted to one or more memory mezzanines on the bottom side of the chassis-less circuit board substrate 602 and may interconnect with a corresponding processor 820 through a ball-grid array.

Each of the processors 820 includes a heatsink 850 secured thereto. Due to the mounting of the memory devices 720 to the bottom side 750 of the chassis-less circuit board substrate 602 (as well as the vertical spacing of the sleds 400 in the corresponding rack 240), the top side 650 of the chassis-less circuit board substrate 602 includes additional "free" area or space that facilitates the use of heatsinks 850 having a larger size relative to traditional heatsinks used in typical servers. Additionally, due to the improved thermal cooling characteristics of the chassis-less circuit board substrate 602, none of the processor heatsinks 850 include cooling fans attached thereto. That is, each of the heatsinks 850 is embodied as a fan-less heatsink. In some examples, the heat sinks 850 mounted atop the processors 820 may overlap with the heat sink attached to the communication circuit 830 in the direction of the airflow path 608 due to their increased size, as illustratively suggested by FIG. 9.

Referring now to FIG. 10, in some examples, the sled 400 may be embodied as an accelerator sled 1000. The accelerator sled 1000 is configured, to perform specialized compute tasks, such as machine learning, encryption, hashing, or other computational-intensive task. In some examples, for example, a compute sled 800 may offload tasks to the accelerator sled 1000 during operation. The accelerator sled 1000 includes various components similar to components of the sled 400 and/or compute sled 800, which have been identified in FIG. 10 using the same reference numbers. The description of such components provided above in regard to FIGS. 6, 7, and 8 apply to the corresponding components of the accelerator sled 1000 and is not repeated herein for clarity of the description of the accelerator sled 1000.

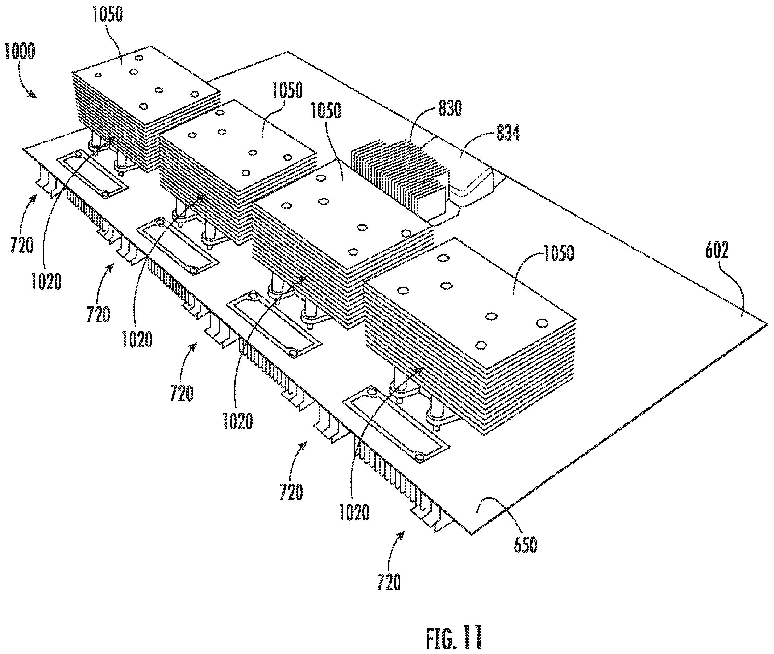

In the illustrative accelerator sled 1000, the physical resources 620 are embodied as accelerator circuits 1020. Although only two accelerator circuits 1020 are shown in FIG. 10, it should be appreciated that the accelerator sled 1000 may include additional accelerator circuits 1020 in other examples. For example, as shown in FIG. 11, the accelerator sled 1000 may include four accelerator circuits 1020 in some examples. The accelerator circuits 1020 may be embodied as any type of processor, co-processor, compute circuit, or other device capable of performing compute or processing operations. For example, the accelerator circuits 1020 may be embodied as, for example, field programmable gate arrays (FPGA), application-specific integrated circuits (ASICs), security co-processors, graphics processing units (GPUs), neuromorphic processor units, quantum computers, machine learning circuits, or other specialized processors, controllers, devices, and/or circuits.

In some examples, the accelerator sled 1000 may also include an accelerator-to-accelerator interconnect 1042. Similar to the resource-to-resource interconnect 624 of the sled 600 discussed above, the accelerator-to-accelerator interconnect 1042 may be embodied as any type of communication interconnect capable of facilitating accelerator-to-accelerator communications. In the illustrative example, the accelerator-to-accelerator interconnect 1042 is embodied as a high-speed point-to-point interconnect (e.g., faster than the I/O subsystem 622). For example, the accelerator-to-accelerator interconnect 1042 may be embodied as a QuickPath Interconnect (QPI), an UltraPath Interconnect (UPI), or other high-speed point-to-point interconnect dedicated to processor-to-processor communications. In some examples, the accelerator circuits 1020 may be daisy-chained with a primary accelerator circuit 1020 connected to the NIC 832 and memory 720 through the I/O subsystem 622 and a secondary accelerator circuit 1020 connected to the NIC 832 and memory 720 through a primary accelerator circuit 1020.

Referring now to FIG. 11, an illustrative example of the accelerator sled 1000 is shown. As discussed above, the accelerator circuits 1020, communication circuit 830, and optical data connector 834 are mounted to the top side 650 of the chassis-less circuit board substrate 602. Again, the individual accelerator circuits 1020 and communication circuit 830 are mounted to the top side 650 of the chassis-less circuit board substrate 602 such that no two heat-producing, electrical components shadow each other as discussed above. The memory devices 720 of the accelerator sled 1000 are mounted to the bottom side 750 of the of the chassis-less circuit board substrate 602 as discussed above in regard to the sled 600. Although mounted to the bottom side 750, the memory devices 720 are communicatively coupled to the accelerator circuits 1020 located on the top side 650 via the I/O subsystem 622 (e.g., through vias). Further, each of the accelerator circuits 1020 may include a heatsink 1070 that is larger than a traditional heatsink used in a server. As discussed above with reference to the heatsinks 870, the heatsinks 1070 may be larger than traditional heatsinks because of the "free" area provided by the memory resources 720 being located on the bottom side 750 of the chassis-less circuit board substrate 602 rather than on the top side 650.

Referring now to FIG. 12, in some examples, the sled 400 may be embodied as a storage sled 1200. The storage sled 1200 is configured, to store data in a data storage 1250 local to the storage sled 1200. For example, during operation, a compute sled 800 or an accelerator sled 1000 may store and retrieve data from the data storage 1250 of the storage sled 1200. The storage sled 1200 includes various components similar to components of the sled 400 and/or the compute sled 800, which have been identified in FIG. 12 using the same reference numbers. The description of such components provided above in regard to FIGS. 6, 7, and 8 apply to the corresponding components of the storage sled 1200 and is not repeated herein for clarity of the description of the storage sled 1200.

In the illustrative storage sled 1200, the physical resources 620 are embodied as storage controllers 1220. Although only two storage controllers 1220 are shown in FIG. 12, it should be appreciated that the storage sled 1200 may include additional storage controllers 1220 in other examples. The storage controllers 1220 may be embodied as any type of processor, controller, or control circuit capable of controlling the storage and retrieval of data into the data storage 1250 based on requests received via the communication circuit 830. In the illustrative example, the storage controllers 1220 are embodied as relatively low-power processors or controllers. For example, in some examples, the storage controllers 1220 may be configured to operate at a power rating of about 75 watts.

In some examples, the storage sled 1200 may also include a controller-to-controller interconnect 1242. Similar to the resource-to-resource interconnect 624 of the sled 400 discussed above, the controller-to-controller interconnect 1242 may be embodied as any type of communication interconnect capable of facilitating controller-to-controller communications. In the illustrative example, the controller-to-controller interconnect 1242 is embodied as a high-speed point-to-point interconnect (e.g., faster than the I/O subsystem 622). For example, the controller-to-controller interconnect 1242 may be embodied as a QuickPath Interconnect (QPI), an UltraPath Interconnect (UPI), or other high-speed point-to-point interconnect dedicated to processor-to-processor communications.

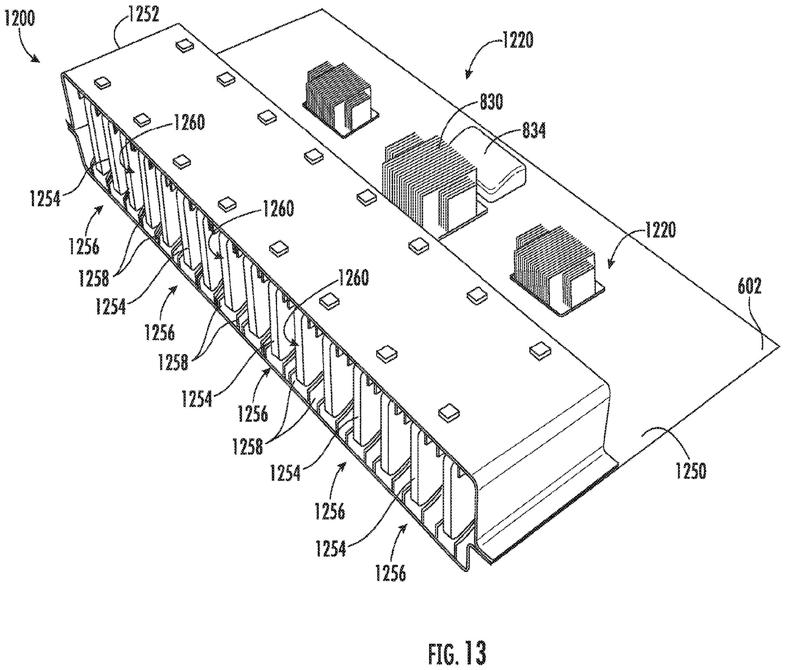

Referring now to FIG. 13, an illustrative example, of the storage sled 1200 is shown. In the illustrative example, the data storage 1250 is embodied as, or otherwise includes, a storage cage 1252 configured to house one or more solid state drives (SSDs) 1254. To do so, the storage cage 1252 includes a number of mounting slots 1256, each of which is configured to receive a corresponding solid state drive 1254. Each of the mounting slots 1256 includes a number of drive guides 1258 that cooperate to define an access opening 1260 of the corresponding mounting slot 1256. The storage cage 1252 is secured to the chassis-less circuit board substrate 602 such that the access openings face away from (i.e., toward the front of) the chassis-less circuit board substrate 602. As such, solid state drives 1254 are accessible while the storage sled 1200 is mounted in a corresponding rack 204. For example, a solid state drive 1254 may be swapped out of a rack 240 (e.g., via a robot) while the storage sled 1200 remains mounted in the corresponding rack 240.

The storage cage 1252 illustratively includes sixteen mounting slots 1256 and is capable of mounting and storing sixteen solid state drives 1254. Of course, the storage cage 1252 may be configured to store additional or fewer solid state drives 1254 in other examples. Additionally, in the illustrative example, the solid state drivers are mounted vertically in the storage cage 1252, but may be mounted in the storage cage 1252 in a different orientation in other examples. Each solid state drive 1254 may be embodied as any type of data storage device capable of storing long term data. To do so, the solid state drives 1254 may include volatile and non-volatile memory devices discussed above.

As shown in FIG. 13, the storage controllers 1220, the communication circuit 830, and the optical data connector 834 are illustratively mounted to the top side 650 of the chassis-less circuit board substrate 602. Again, as discussed above, any suitable attachment or mounting technology may be used to mount the electrical components of the storage sled 1200 to the chassis-less circuit board substrate 602 including, for example, sockets (e.g., a processor socket), holders, brackets, soldered connections, and/or other mounting or securing techniques.

As discussed above, the individual storage controllers 1220 and the communication circuit 830 are mounted to the top side 650 of the chassis-less circuit board substrate 602 such that no two heat-producing, electrical components shadow each other. For example, the storage controllers 1220 and the communication circuit 830 are mounted in corresponding locations on the top side 650 of the chassis-less circuit board substrate 602 such that no two of those electrical components are linearly in-line with each other along the direction of the airflow path 608.

The memory devices 720 of the storage sled 1200 are mounted to the bottom side 750 of the of the chassis-less circuit board substrate 602 as discussed above in regard to the sled 400. Although mounted to the bottom side 750, the memory devices 720 are communicatively coupled to the storage controllers 1220 located on the top side 650 via the I/O subsystem 622. Again, because the chassis-less circuit board substrate 602 is embodied as a double-sided circuit board, the memory devices 720 and the storage controllers 1220 may be communicatively coupled by one or more vias, connectors, or other mechanisms extending through the chassis-less circuit board substrate 602. Each of the storage controllers 1220 includes a heatsink 1270 secured thereto. As discussed above, due to the improved thermal cooling characteristics of the chassis-less circuit board substrate 602 of the storage sled 1200, none of the heatsinks 1270 include cooling fans attached thereto. That is, each of the heatsinks 1270 is embodied as a fan-less heatsink.

Referring now to FIG. 14, in some examples, the sled 400 may be embodied as a memory sled 1400. The storage sled 1400 is optimized, or otherwise configured, to provide other sleds 400 (e.g., compute sleds 800, accelerator sleds 1000, etc.) with access to a pool of memory (e.g., in two or more sets 1430, 1432 of memory devices 720) local to the memory sled 1200. For example, during operation, a compute sled 800 or an accelerator sled 1000 may remotely write to and/or read from one or more of the memory sets 1430, 1432 of the memory sled 1200 using a logical address space that maps to physical addresses in the memory sets 1430, 1432. The memory sled 1400 includes various components similar to components of the sled 400 and/or the compute sled 800, which have been identified in FIG. 14 using the same reference numbers. The description of such components provided above in regard to FIGS. 6, 7, and 8 apply to the corresponding components of the memory sled 1400 and is not repeated herein for clarity of the description of the memory sled 1400.

In the illustrative memory sled 1400, the physical resources 620 are embodied as memory controllers 1420. Although only two memory controllers 1420 are shown in FIG. 14, it should be appreciated that the memory sled 1400 may include additional memory controllers 1420 in other examples. The memory controllers 1420 may be embodied as any type of processor, controller, or control circuit capable of controlling the writing and reading of data into the memory sets 1430, 1432 based on requests received via the communication circuit 830. In the illustrative example, each memory controller 1420 is connected to a corresponding memory set 1430, 1432 to write to and read from memory devices 720 within the corresponding memory set 1430, 1432 and enforce any permissions (e.g., read, write, etc.) associated with sled 400 that has sent a request to the memory sled 1400 to perform a memory access operation (e.g., read or write).

In some examples, the memory sled 1400 may also include a controller-to-controller interconnect 1442. Similar to the resource-to-resource interconnect 624 of the sled 400 discussed above, the controller-to-controller interconnect 1442 may be embodied as any type of communication interconnect capable of facilitating controller-to-controller communications. In the illustrative example, the controller-to-controller interconnect 1442 is embodied as a high-speed point-to-point interconnect (e.g., faster than the I/O subsystem 622). For example, the controller-to-controller interconnect 1442 may be embodied as a QuickPath Interconnect (QPI), an UltraPath Interconnect (UPI), or other high-speed point-to-point interconnect dedicated to processor-to-processor communications. As such, in some examples, a memory controller 1420 may access, through the controller-to-controller interconnect 1442, memory that is within the memory set 1432 associated with another memory controller 1420. In some examples, a scalable memory controller is made of multiple smaller memory controllers, referred to herein as "chiplets", on a memory sled (e.g., the memory sled 1400). The chiplets may be interconnected (e.g., using EMIB (Embedded Multi-Die Interconnect Bridge)). The combined chiplet memory controller may scale up to a relatively large number of memory controllers and I/O ports, (e.g., up to 16 memory channels). In some examples, the memory controllers 1420 may implement a memory interleave (e.g., one memory address is mapped to the memory set 1430, the next memory address is mapped to the memory set 1432, and the third address is mapped to the memory set 1430, etc.). The interleaving may be managed within the memory controllers 1420, or from CPU sockets (e.g., of the compute sled 800) across network links to the memory sets 1430, 1432, and may improve the latency associated with performing memory access operations as compared to accessing contiguous memory addresses from the same memory device.

Further, in some examples, the memory sled 1400 may be connected to one or more other sleds 400 (e.g., in the same rack 240 or an adjacent rack 240) through a waveguide, using the waveguide connector 1480. In the illustrative example, the waveguides are 64 millimeter waveguides that provide 16 Rx (i.e., receive) lanes and 16 Tx (i.e., transmit) lanes. Each lane, in the illustrative example, is either 16 GHz or 32 GHz. In other examples, the frequencies may be different. Using a waveguide may provide high throughput access to the memory pool (e.g., the memory sets 1430, 1432) to another sled (e.g., a sled 400 in the same rack 240 or an adjacent rack 240 as the memory sled 1400) without adding to the load on the optical data connector 834.

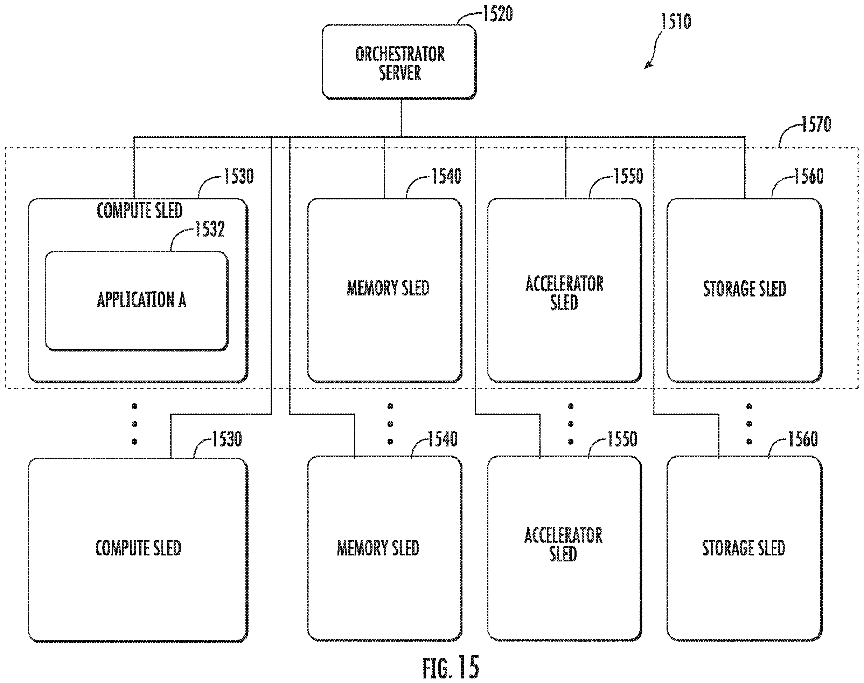

Referring now to FIG. 15, a system for executing one or more workloads (e.g., applications) may be implemented in accordance with the data center 100. In the illustrative example, the system 1510 includes an orchestrator server 1520, which may be embodied as a managed node comprising a compute device (e.g., a processor 820 on a compute sled 800) executing management software (e.g., a cloud operating environment, such as OpenStack) that is communicatively coupled to multiple sleds 400 including a large number of compute sleds 1530 (e.g., each similar to the compute sled 800), memory sleds 1540 (e.g., each similar to the memory sled 1400), accelerator sleds 1550 (e.g., each similar to the memory sled 1000), and storage sleds 1560 (e.g., each similar to the storage sled 1200). One or more of the sleds 1530, 1540, 1550, 1560 may be grouped into a managed node 1570, such as by the orchestrator server 1520, to collectively perform a workload (e.g., an application 1532 executed in a virtual machine or in a container). The managed node 1570 may be embodied as an assembly of physical resources 620, such as processors 820, memory resources 720, accelerator circuits 1020, or data storage 1250, from the same or different sleds 400. Further, the managed node may be established, defined, or "spun up" by the orchestrator server 1520 at the time a workload is to be assigned to the managed node or at any other time, and may exist regardless of whether any workloads are presently assigned to the managed node. In the illustrative example, the orchestrator server 1520 may selectively allocate and/or deallocate physical resources 620 from the sleds 400 and/or add or remove one or more sleds 400 from the managed node 1570 as a function of quality of service (QoS) targets (e.g., performance targets associated with a throughput, latency, instructions per second, etc.) associated with a service level agreement for the workload (e.g., the application 1532). In doing so, the orchestrator server 1520 may receive telemetry data indicative of performance conditions (e.g., throughput, latency, instructions per second, etc.) in each sled 400 of the managed node 1570 and compare the telemetry data to the quality of service targets to determine whether the quality of service targets are being satisfied. The orchestrator server 1520 may additionally determine whether one or more physical resources may be deallocated from the managed node 1570 while still satisfying the QoS targets, thereby freeing up those physical resources for use in another managed node (e.g., to execute a different workload). Alternatively, if the QoS targets are not presently satisfied, the orchestrator server 1520 may determine to dynamically allocate additional physical resources to assist in the execution of the workload (e.g., the application 1532) while the workload is executing. Similarly, the orchestrator server 1520 may determine to dynamically deallocate physical resources from a managed node if the orchestrator server 1520 determines that deallocating the physical resource would result in QoS targets still being met.

Additionally, in some examples, the orchestrator server 1520 may identify trends in the resource utilization of the workload (e.g., the application 1532), such as by identifying phases of execution (e.g., time periods in which different operations, each having different resource utilizations characteristics, are performed) of the workload (e.g., the application 1532) and pre-emptively identifying available resources in the data center 100 and allocating them to the managed node 1570 (e.g., within a predefined time period of the associated phase beginning). In some examples, the orchestrator server 1520 may model performance based on various latencies and a distribution scheme to place workloads among compute sleds and other resources (e.g., accelerator sleds, memory sleds, storage sleds) in the data center 100. For example, the orchestrator server 1520 may utilize a model that accounts for the performance of resources on the sleds 400 (e.g., FPGA performance, memory access latency, etc.) and the performance (e.g., congestion, latency, bandwidth) of the path through the network to the resource (e.g., FPGA). As such, the orchestrator server 1520 may determine which resource(s) should be used with which workloads based on the total latency associated with each potential resource available in the data center 100 (e.g., the latency associated with the performance of the resource itself in addition to the latency associated with the path through the network between the compute sled executing the workload and the sled 400 on which the resource is located).

In some examples, the orchestrator server 1520 may generate a map of heat generation in the data center 100 using telemetry data (e.g., temperatures, fan speeds, etc.) reported from the sleds 400 and allocate resources to managed nodes as a function of the map of heat generation and predicted heat generation associated with different workloads, to maintain a target temperature and heat distribution in the data center 100. Additionally or alternatively, in some examples, the orchestrator server 1520 may organize received telemetry data into a hierarchical model that is indicative of a relationship between the managed nodes (e.g., a spatial relationship such as the physical locations of the resources of the managed nodes within the data center 100 and/or a functional relationship, such as groupings of the managed nodes by the customers the managed nodes provide services for, the types of functions typically performed by the managed nodes, managed nodes that typically share or exchange workloads among each other, etc.). Based on differences in the physical locations and resources in the managed nodes, a given workload may exhibit different resource utilizations (e.g., cause a different internal temperature, use a different percentage of processor or memory capacity) across the resources of different managed nodes. The orchestrator server 1520 may determine the differences based on the telemetry data stored in the hierarchical model and factor the differences into a prediction of future resource utilization of a workload if the workload is reassigned from one managed node to another managed node, to accurately balance resource utilization in the data center 100.

To reduce the computational load on the orchestrator server 1520 and the data transfer load on the network, in some examples, the orchestrator server 1520 may send self-test information to the sleds 400 to enable each sled 400 to locally (e.g., on the sled 400) determine whether telemetry data generated by the sled 400 satisfies one or more conditions (e.g., an available capacity that satisfies a predefined threshold, a temperature that satisfies a predefined threshold, etc.). Each sled 400 may then report back a simplified result (e.g., yes or no) to the orchestrator server 1520, which the orchestrator server 1520 may utilize in determining the allocation of resources to managed nodes.

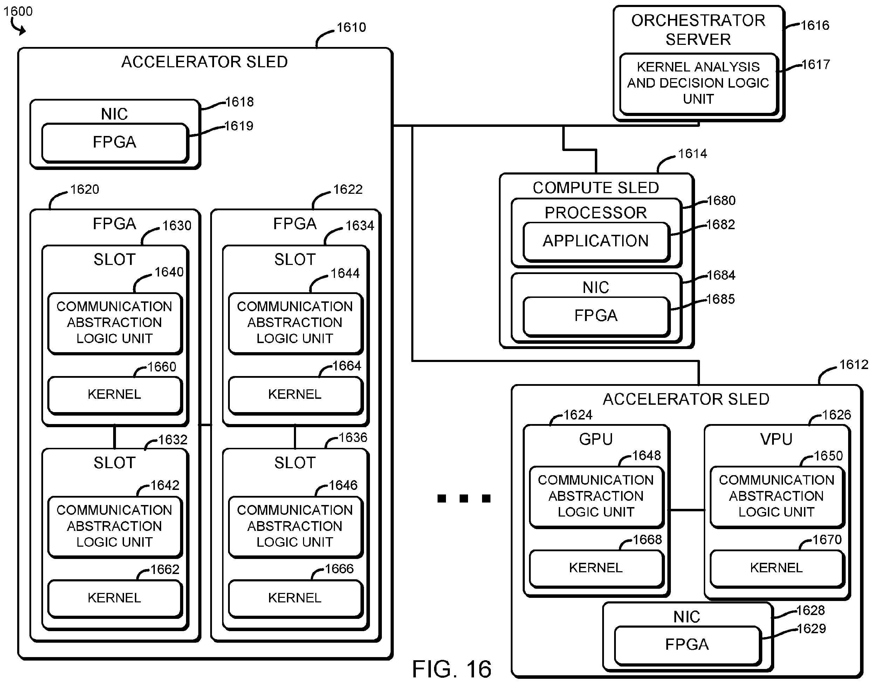

Referring now to FIG. 16, a system 1600 for managing accelerator resources includes multiple accelerator sleds 1610, 1612, and a compute sled 1614 in communication with each other and with an orchestrator server 1616, which may also be referred to as a telemetry service device. The orchestrator server 1616 may be similar to the orchestrator server 1520 described herein. Further, although the system 1600 depicts the orchestrator server 1616 as a single server, other examples may include multiple devices carrying out logic of the orchestrator server 1616 described here. Each accelerator sled 1610, 1612 is similar to the accelerator sled 1000 of FIG. 10. While two accelerator sleds 1610, 1612 are shown for clarity, it should be understood that the system 1600 may have a different number of accelerator sleds (e.g., tens, hundreds, or thousands) and may include other types of sleds (memory, storage, etc.). In the illustrative example, the accelerator sled 1610 includes two accelerator devices 1620, 1622, similar to the accelerator circuits 1020 of the accelerator sled 1000 of FIG. 10. In the illustrative example, each accelerator device 1620, 1622 is an FPGA. The gates of the FPGA 1620 are partitioned into two slots 1630, 1632 (e.g., each a subset of the gates present in the FPGA 1620). Each slot 1630, 1632 implements a corresponding kernel 1660, 1662, each of which may be embodied as a set of gates configured to perform a set of functions (e.g., operations offloaded from a compute sled, such as the compute sled 1614, to increase the speed at which a workload (e.g., the application 1682 executed by a processor 1680) is performed on behalf of a customer, also referred to herein as a tenant). Additionally, each slot 1630, 1632, in the illustrative example, includes a communication abstraction logic unit 1640, 1642 which may be embodied as any device or circuitry (e.g., a subset of the gates of the corresponding slot 1630, 1632, a processor, a controller, etc.) configured to identify other accelerator devices and accelerator device kernels available in the system 1600, identify physical communication path(s) between the corresponding kernel 1660, 1662 and the identified accelerator devices and kernels in the system 1600, and selectively establish a logical communication path with one or more of the accelerator devices and their associated kernel(s) (e.g., at the request of the corresponding kernel 1660, 1662). The physical communication paths are embodied as the underlying buses and networking connections (e.g., PCIe, Ethernet, optical fiber, waveguides, etc.) within an accelerator device, between accelerator devices on the same sled, or between sleds and a logical communication connection is an abstraction of the one or more of the physical communication paths, exposed by the communication abstraction logic unit 1640, 1642 to the corresponding kernel 1660, 1662. In establishing a logical communication path, a communication abstraction logic unit 1640, 1642, in the illustrative example, determines an amount of communication capacity (e.g., throughput, latency, etc.) to provide to the corresponding kernel 1660, 1662 based on quality of service (QoS) parameters associated with the kernel (e.g., QoS parameters defined in a service level agreement (SLA) between a tenant associated with the kernel 1660, 1662 and an operator of the system 1600, QoS parameters included in a request from the kernel 1660, 1662, etc.). Furthermore, the communication abstraction logic unit 1640, 1642 continually monitors availability data (e.g., provided to the communication abstraction logic unit 1640 by other communication abstraction logic units in the system 1600 and/or based on telemetry data collected by the orchestrator server 1616) indicative of the accelerator devices and kernels available in the system 1600, the latency (e.g., time delays to send and receive data) and congestion (e.g., amount of traffic) on the physical communication paths, and/or other factors. Additionally, the communication abstraction logic unit 1640, 1642 may continually modify (e.g., reroute) a logical communication path through the available physical communication paths without burdening the kernel 1660, 1662 with managing the communication details.

The accelerator device 1622 includes slots 1634, 1636, similar to the slots 1630, 1632 described above. Further, each slot 1634, 1636 includes a corresponding kernel 1664, 1666 and communication abstraction logic unit 1644, 1646, similar to the communication abstraction logic units 1640, 1642 described above. Additionally, the accelerator sled 1612 includes accelerators devices 1624 and 1626. The accelerator device 1624, in the illustrative example, is a graphics processing unit (GPU), which may be embodied as any device or circuitry (e.g., a programmable logic chip, a processor, etc.) configured to perform graphics-related computations (e.g., matrix multiplication, vector operations, etc.), and the accelerator device 1626, in the illustrative example, is a vision processing unit (VPU), which may be embodied as any device or circuitry (e.g., a programmable logic chip, a processor, etc.) configured to perform operations related to machine vision, machine learning, and artificial intelligence. Each accelerator device 1624, 1626, in the illustrative example, includes a corresponding kernel 1668, 1670 and communication abstraction logic unit 1648, 1650, similar to the communication abstraction logic units 1640, 1642 described above. While, in the illustrative example, each slot of the accelerator devices 1620, 1622 (FPGAs) includes a corresponding communication abstraction logic unit, in other examples, there may be one communication abstraction logic unit per accelerator device, or one abstraction logic unit per sled.

As further shown, each of the sleds 1610, 1612, and 1614 include a network interface controller (NIC) 1618, 1628, 1684, respectively. Each NIC 1618, 1628, 1684 may be similar to the NIC 832 described relative to FIGS. 8, 10, 12, and 14. Further, each NIC 1618, 1628, 1684 may include accelerator hardware or circuitry therein, such as FPGA 1619, 1629, 1685, respectively. As further described herein, examples disclose techniques for offloading accelerator kernel tasks to the FPGA 1619, 1629, 1685. More particularly, a request going from a compute sled to a target accelerator device generally traverses one or more hops, such as the NIC 1618, 1628, 1684, prior to reaching the target accelerator device. In an example, the NIC 1618, 1628, 1684 may include inline processing logic to identify one or more accelerator tasks of a workload that can be performed by the FPGA 1619, 1629, 1685, respectively. Doing so allows the system 1600 to reduce load on the main accelerator devices performing the workload.

Further, as shown, the orchestrator server 1616 includes a kernel analysis and decision logic unit 1617. The kernel analysis and decision logic unit 1617 may be embodied as any device or circuitry to obtain telemetry data indicative of resource usage and power consumption of the accelerator sleds 1610, 1612 and the compute sled 1617. Further, the kernel analysis and decision logic unit 1617 may evaluate the telemetry data relative to one or more policies (e.g., a service level agreement (SLA) or one or more quality-of-service (QoS) requirements). The policies may include thresholds, which, when exceeded, trigger the kernel analysis and decision logic unit 1617 to orchestrate actions to perform in response.

For instance, as further described herein, the kernel analysis and decision logic unit 1617 may cause a given accelerator device to migrate an accelerator kernel to a target accelerator device (e.g., on another accelerator sled) to maintain QoS requirements. For example, if resource usage on a given accelerator device is relatively high (e.g., due to execution of multiple workloads by accelerator kernels), performance may possibly falter, potentially resulting in a QoS violation. To address this, the kernel analysis and decision logic unit 1617 may migrate one or more of the kernels to other accelerator devices in the system 1600 to reduce load on the currently executing accelerator devices, and in turn support compliance with specified policies.

In addition, as further described herein, the kernel analysis and decision logic unit 1617 may monitor power consumption of the accelerator sleds 1610, 1612 relative to power consumption thresholds specified by policy. To ensure that power consumption is maintained at stable levels, the kernel analysis and decision logic unit 1617 may orchestrate a "scale-out" operation of accelerator kernels from a given accelerator sled to other accelerator sleds. In an example, a scale-out operation refers to re-provisioning a workload currently executing on a given accelerator sled to one or more additional accelerator sleds. During a scale-out operation, the orchestrator server 1616 may migrate one or more accelerator kernels to accelerator devices (or cloned instances of the currently executing accelerator devices) to another accelerator sled. By scaling-out accelerator kernels to another accelerator sled, power consumption may be further distributed across the accelerator sleds executing the workload.

In addition, examples presented herein also disclose scaling-out accelerator kernels to accelerator devices of differing types. For example, in an inter-kernel communication topology, a given accelerator kernel may execute on an FPGA (e.g., FPGA 1620), while another accelerator kernel executes on a GPU (e.g., GPU 1624). Doing so allows the orchestrator server 1616 to assign certain workload tasks (e.g., artificial intelligence functions, deep learning, cryptographic functions, etc.) that are more suited to one type of accelerator device over the other and thus optimize a workload executing within the system 1600.

Further, examples presented herein also disclose techniques for registering automatic heartbeat notifications from accelerator kernels associated with a scale-out operation. More particularly, based on a workload specification, the orchestrator server 1616 may direct accelerator kernels to transmit a "heartbeat" indicative of a kernel execution at a specified interval to the orchestrator server 1616. In the event that the orchestrator server 1616 does not receive a heartbeat notification at the specified interval, the orchestrator server 1616 may generate an alert that may be transmitted to a user or an application associated with the workload.

Further still, the orchestrator server 1616 may "scale-up" a workload within a given accelerator sled. In an example, a scale-up operation refers to distributing, within the accelerator sled, workload tasks across additional accelerator devices (or accelerator device instances). Scaling-up operations allow a given accelerator device to execute multiple workloads. However, one concern relating to scaling-up workloads is that a fragmentation situation may occur, in which a workload may be allocated to non-adjacent accelerator devices within the sled, which may affect workload performance. To address this, examples presented herein also disclose "defragmenting" accelerator devices associated with a scale-up operation. In particular, assume that an accelerator device is executing a workload A but not executing a workload B, and that the accelerator device is adjacent to another accelerator device executing the workload B. On completion of the workload A, the accelerator device may advertise availability of resources. The orchestrator server 1616 may then migrate accelerator kernels associated with workload B executing on non-adjacent accelerator devices to the available accelerator device. Doing so may improve performance of the workload execution.

In an example, inter-kernel communication enables kernels to multicast resource usage and availability to other kernels in the system 1600. A given kernel may, upon receiving a multicast indicative of an availability of accelerator resources, request the accelerator resources from the kernel. Further, in an example, inter-kernel communication channels enable an accelerator device to transmit, via the inter-kernel communication channels, intermediate data targeted toward a given kernel. For example, the accelerator device may send kernel bit streams over the communication channels to provision a given accelerator function with the intermediate data.

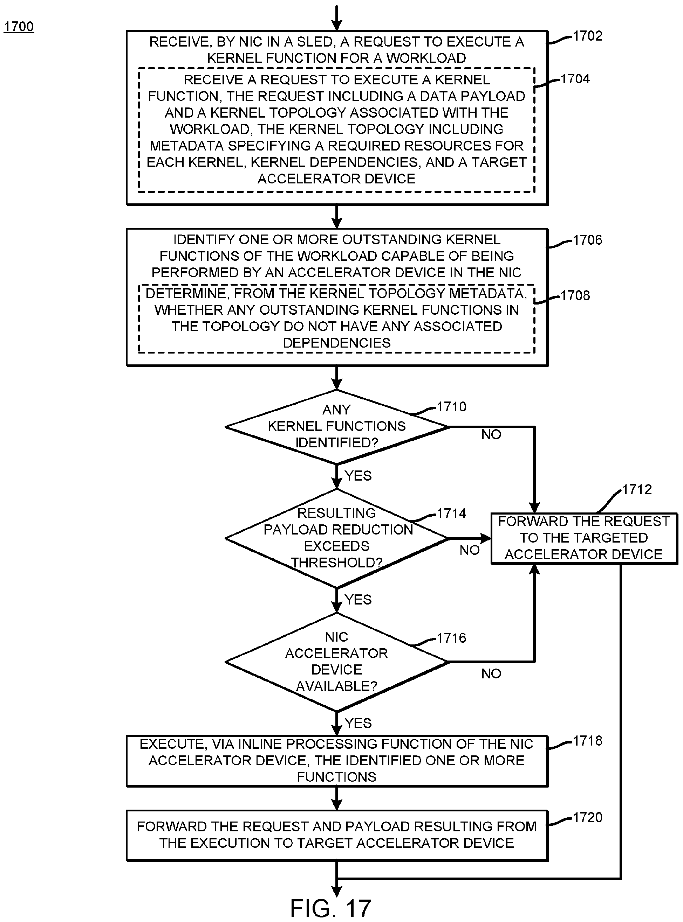

Referring now to FIG. 17, the NIC 1618, 1628, 1684, in operation, may perform a method 1700 for performing inline processing of an accelerator function. As shown, the method 1700 begins in block 1702, in which the NIC receives a request to execute an accelerated function for a workload. The request may be targeted to be forwarded by the NIC to a given accelerator device on an underlying accelerator sled. For example, in block 1704, the NIC may receive a request to execute a kernel function, in which the request includes a data payload (e.g., a result of an execution of preceding workload task by another accelerator kernel) and a kernel topology associated with the workload. The kernel topology may include metadata that specifies an amount of required resources associated with each kernel in the topology, kernel dependencies (e.g., if, in the topology, a kernel requires results from one or more kernels), and a target accelerator device in which the request is to be forwarded.

In block 1706, the NIC identifies one or more outstanding kernel functions of the workload that is capable of being performed by an accelerator device (e.g., FPGA 1619, 1629, 1685) in the NIC. More particularly, in block 1708, the NIC determines, from the metadata provided with the kernel topology, whether any outstanding kernel functions in the topology do not have any associated dependencies. Such kernel functions may be performed by the accelerator device in the NIC.

In block 1710, the NIC determines whether any kernel functions were identified in the topology. If not, then in block 1712, the NIC forwards the request to the target accelerator device. Otherwise, the method 1700 proceeds to block 1714, in which the NIC determines whether the reduction in data payload resulting from execution the function by the FPGA exceeds a given threshold (e.g., specified in a policy). If not, then the method 1700 proceeds to block 1712. Otherwise, if so, then in block 1716, the NIC determines whether the accelerator device associated with the NIC is available to execute the kernel function. If not, then the method 1700 proceeds to block 1712. If the NIC accelerator device is available to execute the kernel function, then in block 1718, the accelerator device executes, via an inline processing function, the identified one or more accelerator functions. Thereafter, in block 1720, the NIC may forward the resulting data payload and the request to the target accelerator device.

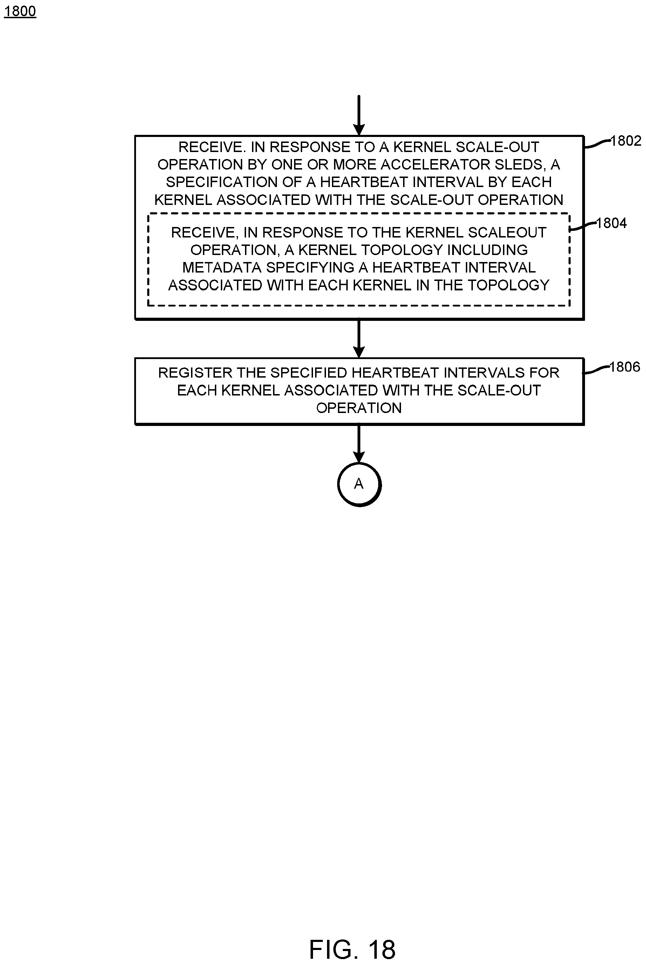

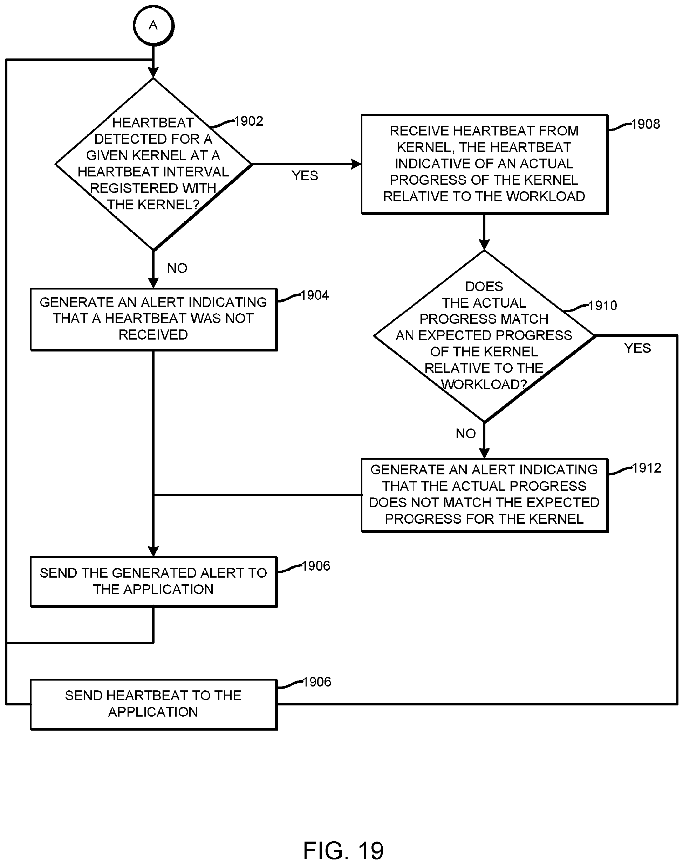

Referring now to FIGS. 18 and 19, the orchestrator server 1616, in operation, may perform a method 1800 for managing accelerator kernel heartbeats in the system 1600. As stated, an application (e.g., the application 1682) may specify heartbeat notifications be sent to the orchestrator server 1616 by accelerator kernels involved in a scale-out operation. One concern is that a user may want to monitor kernel performance with minimal interference to ensure that an application is progressing at a given pace (or is otherwise not hanging or inactive).

As shown, the method 1800 begins in block 1802, in which the orchestrator server 1616 receives, in response to execution of a kernel scale-out operation by one or more accelerator sleds, a specification of a heartbeat interval by each accelerator kernel associated with the scale-out operation. For example, to satisfy QoS requirements, a workload may specify that particular accelerator kernels complete functions within a particular deadline. The workload may provide such specifications to be provided by a heartbeat notification to be sent at a given interval. In an example, in block 1804, the orchestrator server 1616 receives, in response to the kernel scale-out operation, a kernel topology including metadata specifying a heartbeat interval associated with each kernel in the topology. In block 1806, the orchestrator server 1616 registers the specified heartbeat intervals and expected kernel activity for each kernel associated with the scale-out operation.

Turning now to FIG. 19, in block 1902, the orchestrator server 1616 determines, for a given accelerator kernel, whether a heartbeat notification is detected at the specified interval. If not, then in block 1904, the orchestrator server 1616 generates an alert indicating that a heartbeat notification was not received from the kernel. In block 1906, the orchestrator server 1616 sends the generated alert to the application.

If the orchestrator server 1616 receives a heartbeat notification from the accelerator kernel (e.g., in block 1907), the orchestrator server 1616 may evaluate the heartbeat notification to determine activity, e.g., a progress of the accelerator kernel relative to an underlying workload, associated with an execution of the kernel. In block 1910, the orchestrator server 1616 determines whether the actual progress matches an expected progress. If so, then in block 1914, the orchestrator server 1616 sends the heartbeat to the application. The method 1800 then returns to block 1902, in which the orchestrator server 1616 continues to monitor for heartbeat notifications from the accelerated kernel (e.g., until completion of the workload). In block 1912, if the actual progress does not match the expected progress, then in block 1912, the orchestrator server 1616 generates an alert indicating that the actual progress does not match the expected progress for the kernel. The method 1800 then proceeds to block 1906, in which the orchestrator server 1616 sends the generated alert to the application. The method 1800 may then return to block 1902.

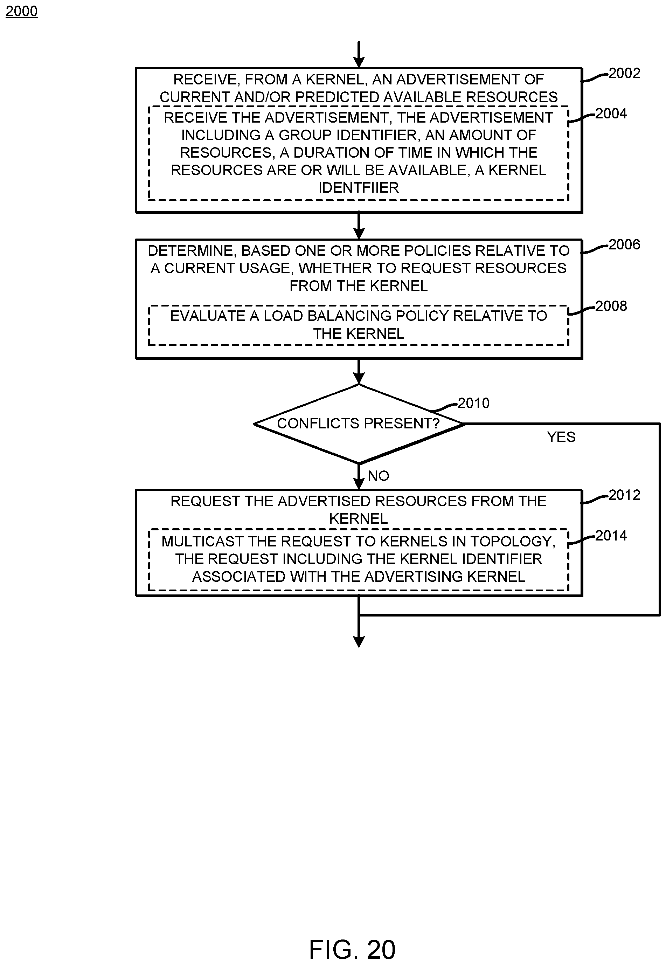

Referring now to FIG. 20, an accelerator kernel configured on an accelerator device of an accelerator sled may perform a method 2000 for managing information of an availability of accelerator resources that is multicast via inter-kernel communication channels. In this example, the system 1600 may include multicast domains in the inter-kernel architecture for a kernel to advertise the availability of spare resources to perform additional workload tasks (or will have a specified amount of units of time in spare resources).

As shown, the method 2000 begins in block 2002, in which an accelerator kernel may receive, from another kernel, an advertisement of currently available resources (or resources that are predicted to be available). More particularly, in block 2004, the accelerator kernel may receive an advertisement that includes a group identifier (e.g., an identifier indicative of a workload that the kernel is associated with), and amount of accelerator resources available, a duration of time in which the resources are or will be available, and a kernel identifier.

In block 2006, the accelerator kernel determines, based on one or more policies and relative to a current usage thereof, whether to request resources from the kernel. For example, in block 2008, the accelerator kernel evaluates a load balancing policy relative to the accelerator kernel. Other examples of policies include SLAs and QoS requirements associated with the workload, and the like.

Further, in block 2010, the accelerator determines whether any conflicts for the resources are present. More particularly, to claim the accelerator resources advertised to be available, a given accelerator kernel may multicast a request for the resources using the advertised kernel identifier, creating a potential conflict for another accelerator kernel requesting the resources. If no conflicts are present, then in block 2012, the accelerator kernel may request the advertised resources from the multicasting kernel. For instance, in block 2014, the accelerator kernel may multicast the request to kernels in the associated kernel topology. The request includes the identifier of the advertising kernel. If a conflict exists, the method 2000 may end if another accelerator device claims the resources. However, each accelerator kernel may also include logic to resolve a conflict situation, e.g., a priority may be defined for a given kernel, and kernels having higher priority may receive the advertised resources in event of a conflict.

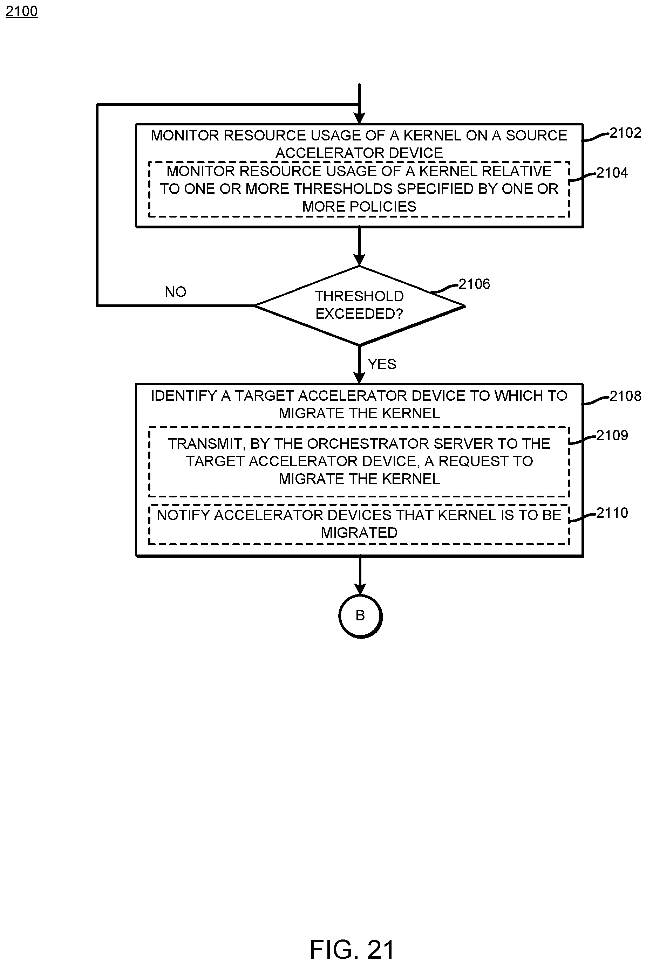

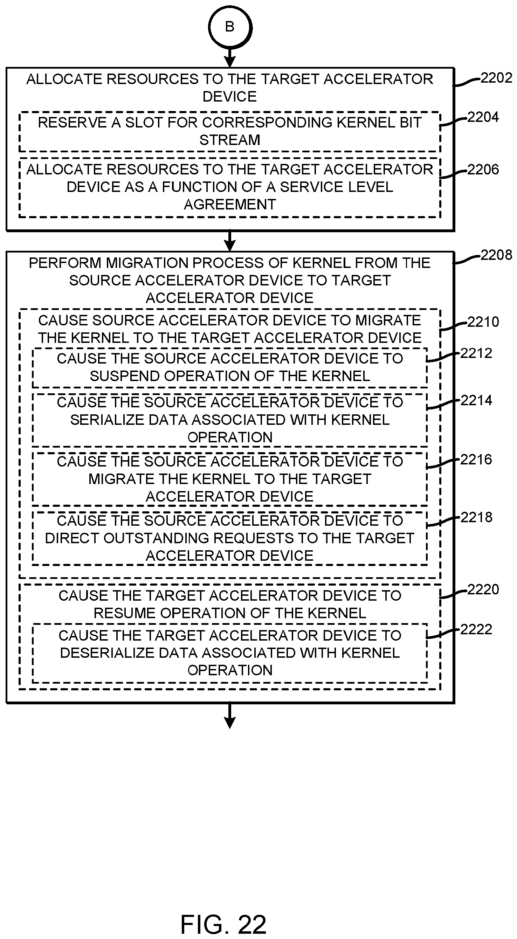

Referring now to FIGS. 21 and 22, the orchestrator server 1616, in operation, may perform a method 2100 for migrating an accelerator kernel from one accelerator device to another to comply with QoS requirements and/or other policies. In terms of QoS, it may not always be possible to achieve performance that kernels inside the inter-kernel architecture can achieve. In this, each kernel may be associated with telemetry monitors. As shown, the method 2100 begins in block 2102, in which the orchestrator server 1616 monitors resource usage of a kernel on a source accelerator device. For instance, in block 2104, the orchestrator server 1616 monitors resource usage of a kernel relative to one or more thresholds specified by one or more policies including a SLA, QoS requirements, and the like.

In block 2106, the orchestrator server 1616 determines whether a specified threshold is exceeded. If not, then the method 2100 returns to block 2102. Otherwise, if a threshold is exceeded, then in block 2108, the orchestrator server 1616 identifies a target accelerator device (e.g., from a registry of accelerator devices in the system 1600) to which to migrate the kernel. For example, in block 2109, the orchestrator server 1616 transmits to a target accelerator device, a request to migrate the kernel. In such a case, the orchestrator server 1616 may identify the target accelerator device as a function of the request. Further, in block 2110, the orchestrator server 1616 may notify accelerator devices associated with the underlying inter-kernel topology that the kernel is to be migrated.

Turning now to FIG. 22, in block 2202, the orchestrator server 1616 allocates resources to the target accelerator device. For instance, in block 2204, the orchestrator server 1616 reserves a slot for a corresponding kernel bit stream on the target accelerator device. In block 2206, the orchestrator server 1616 allocates the resources to the target accelerator device as a function of a policy, e.g., a service level agreement.

In block 2208, the orchestrator server 1616 performs a migration process of the kernel from the source accelerator device to the target accelerator device. For instance, to do so, in block 2210 the orchestrator server 1616 causes the source accelerator device to carry out the migration process. More particularly, in block 2212, the orchestrator server 1616 may cause the source accelerator to suspend operation of the accelerator kernel. Doing so results in requests targeted to the accelerator kernel to remain in egress queues of requesting devices. In block 2214, the orchestrator server 1616 causes the source accelerator device to serialize data associated with the operation of the accelerator kernel. Thereafter, in block 2216, the orchestrator server 1616 causes the source accelerator device to migrate the kernel to the target accelerator device. To do so, the orchestrator server 1616 may transmit the kernel to the target accelerator device, which in turn generates bit stream data from the kernel and configures a slot thereon. In block 2218, the orchestrator server 1616 causes the source accelerator device to direct standing requests to the target accelerator device. For example, the source accelerator device may broadcast, over the inter-kernel communication channels, that the kernel is migrated to the target accelerator device. In block 2220, the orchestrator server 1616 causes the target accelerator device to resume operation of the kernel. Further, as part of resuming operation of the kernel, in block 2222, the orchestrator server 1616 causes the target accelerator device to deserialize data associated with the kernel operation, including data associated with memory on the target accelerator device, data structures in the underlying bit stream data, and storage inside the target accelerator device.

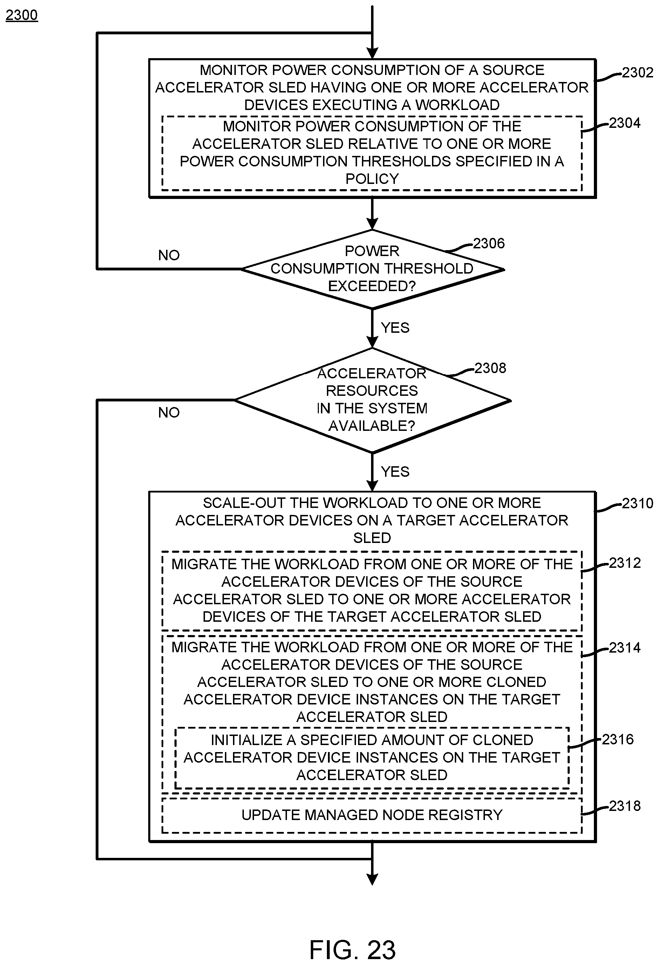

Referring now to FIG. 23, the orchestrator server 1616, in operation, may perform a method 2300 for managing power consumption of accelerator resources. In many cases, an accelerator sled has multiple accelerator device workloads, which can result in relatively high power consumption. In an example, the orchestrator server 1616 may take an accelerator device instance currently associated with a scale-up operation and migrate the instance to another sled. In another example, the orchestrator server 1616 may take an accelerator device instance currently associated with a scale-up operation and migrate the instance to one or more cloned instances executing on different sleds at half the clock rate to spread the power consumption across the sleds. As shown, the example method 2300 begins in block 2302, the orchestrator server 1616 monitors power consumption of a source accelerator sled having one or more accelerator devices executing a workload. For instance, in block 2304, the orchestrator server 1616 monitors power consumption of the accelerator sled relative to one or more power consumption thresholds specified in a policy (e.g., a SLA, QoS requirements, load balancing policies, application specifications, etc.). In block 2306, the orchestrator server 1616 determines whether a power consumption threshold is exceeded. If not, then the method 2300 returns to block 2302. Otherwise, the orchestrator server 1616 determines whether accelerator resources in the system 1300 are available for a scale-out operation. If not, then the method 2300 ends.

However, if accelerator resources are available, then in block 2310, the orchestrator server 1616 scales-out the workload to one or more accelerator devices on a target accelerator sled. For instance, to do so, in block 2312, the orchestrator server 1616 may migrate the workload from one or more of the accelerator devices of the source accelerator sled to one or more accelerator devices of the target accelerator sled. As another example, in block 2314, the orchestrator server 1616 may migrate the workload from one or more of the accelerator devices of the source accelerator sled to one or more cloned instances of the accelerator device on the target accelerator sled. To do so, in block 2316, the orchestrator server 1616 causes the target accelerator device to initialize a specified amount of cloned instances of the underlying accelerator device. Because the scale-out operation may affect the composition of a node in the system 1600, in block 2318, the orchestrator server 1616 may update a managed node registry reflecting the change made by the scale-out operation.

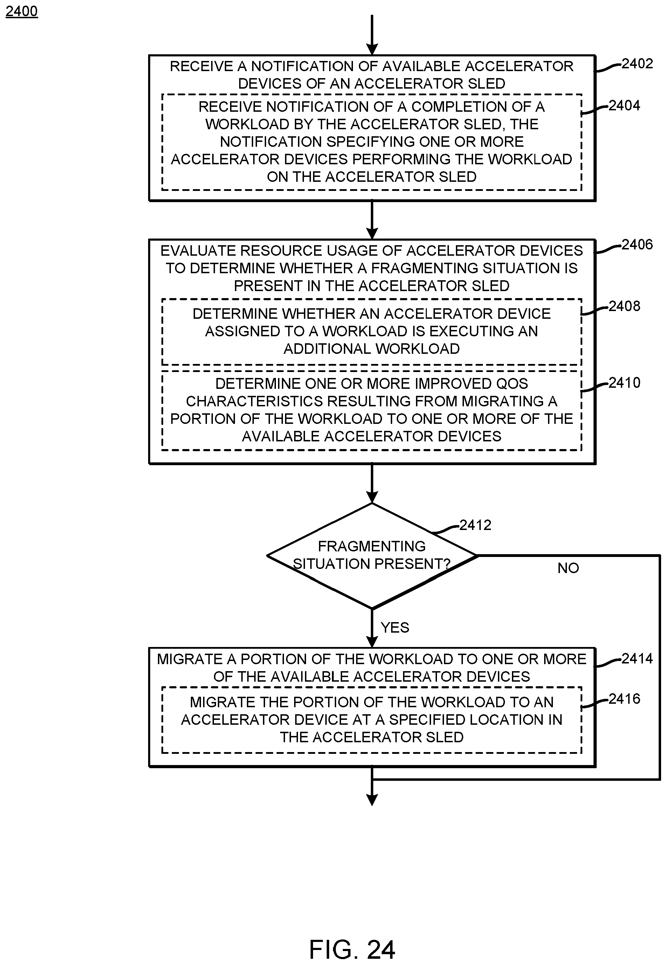

Referring now to FIG. 24, the orchestrator server 1616, in operation, may perform a method 2400 for managing workload placement in an accelerator sled, e.g., following a scale-up operation. In particular, based on a resource utilization of an accelerator sled, a workload that includes kernel-to-kernel communication features and is associated with a topology including multiple accelerator devices may be inefficiently placed on the accelerator sled. Such a case may be referred to herein as "fragmentation" of the workload. Fragmentation may be due to collocated workload on one or more of the accelerator devices. For instance, an inefficiently placed accelerator device may be located a single hop away from the other devices on a non-fully meshed accelerator device. At some point, a collocated workload may complete, resulting in availability of the underlying accelerator resources. To improve latency of the current workload, the affected accelerator device may be cloned as a device instance and migrated to newly available accelerator resources.

As shown, the method 2400 begins in block 2402, in which the orchestrator server 1616 receives a notification of available accelerator devices of an accelerator sled. More particularly, in block 2404, the orchestrator server 1616 may receive a notification indicative of a completion of a workload by the accelerator sled. The notification may specify the accelerator devices associated with the workload.

In block 2406, the orchestrator server 1616 evaluates usage of accelerator devices to determine whether a fragmenting situation is present in the accelerator sled. For instance, in block 2408, the orchestrator server 1616 determines whether an accelerator device on the sled that is assigned to a workload is executing an additional workload. To do so, the orchestrator server 1616 may evaluate an inter-kernel topology of workloads in the system 1600 to identify collocated workloads on accelerator devices on the accelerator sled. The orchestrator server 1616 may also determine whether migration of one of the collocated workloads to any of the available accelerator devices would result in an adjacent positioning of accelerator devices executing the workload. Further, in block 2410, the orchestrator server 1616 determines one or more improved QoS characteristics resulting from migration of a portion of the workload to one or more of the available accelerator devices.

In block 2412, the orchestrator server 1616 determines, based on the evaluation, whether a fragmenting situation is present. If not, then the method 2400 ends. Otherwise, in block 2414, the orchestrator server 1616 migrates a portion of the workload to one or more of the available accelerator devices. More particularly, in block 2416, the orchestrator server 1616 migrates the portion of the workload to an accelerator device at a specified location in the accelerator sled. The specified location may correspond to a target available accelerator device that is adjacent to another accelerator device currently executing the workload on the accelerator sled. The source accelerator device (from which the workload is being migrated) may be an accelerator device that is not adjacent to any accelerator devices executing the workload.

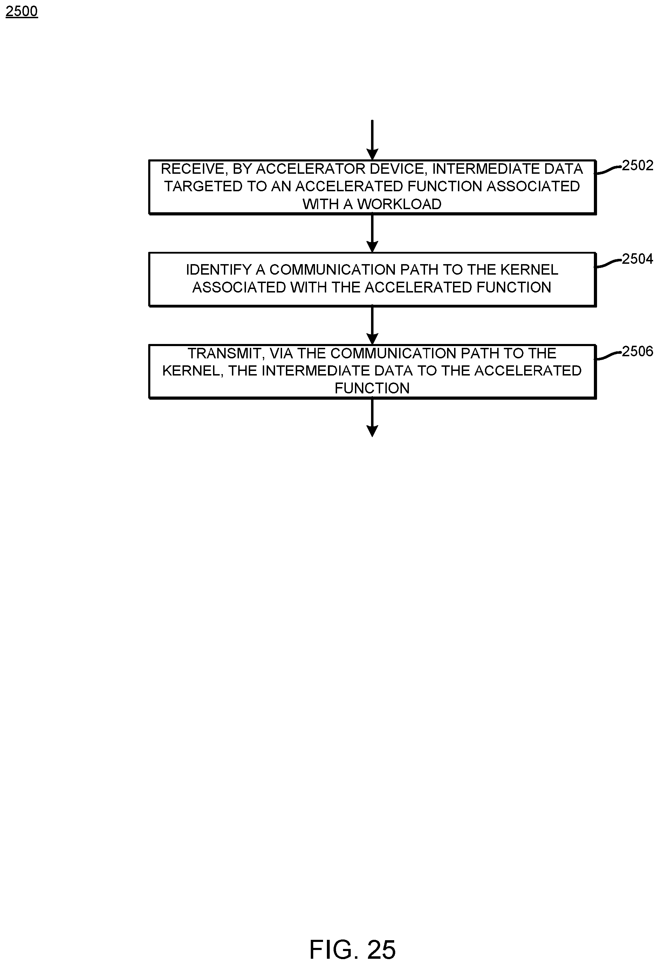

Referring now to FIG. 25, an accelerator device (e.g., the accelerator devices 1610, 1612), in operation, may perform a method 2500 for provisioning accelerator functions with intermediate data via inter-kernel communication. In this example method, assume that the system 1600 includes three or more kernel-to-kernel workloads assigned to two accelerator devices. In this case, the accelerator device can transmit kernel bit stream data through inter-kernel communication channels, inline, to provision an accelerated function performed by a kernel. Doing so results in time-multiplexing multiple accelerated functions in a workload on a composite of two accelerator devices (or accelerator device instances).

As shown, the method 2500 begins in block 2502, in which the accelerator device receives intermediate data targeted to an accelerated function associated with a workload. The intermediate data may include bit stream data indicative of a result of processing of a workload task by another kernel. Further, the intermediate data may originate from another accelerator device. In block 2504, the accelerator device identifies a communication path to the kernel associated with the accelerated function. For example, to do so, the accelerator device may evaluate an inter-kernel topology and determine the path at which to transmit the intermediate data. Once identified, in block 2506, the accelerator device transmits, via the identified communication path to the kernel, the intermediate data to the accelerator function.

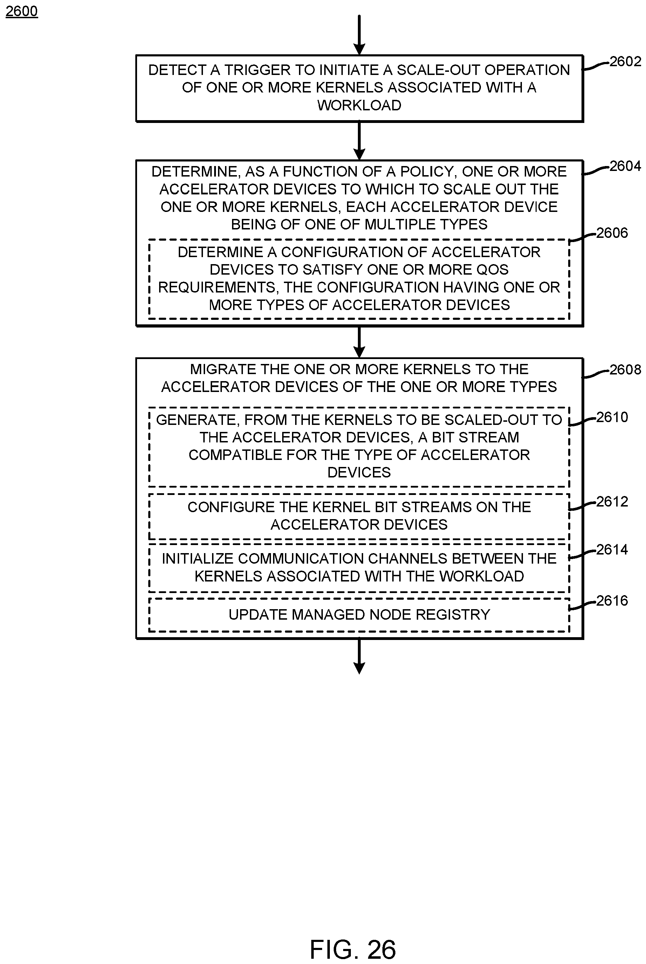

Referring now to FIG. 26, the orchestrator server 1616, in operation, may perform a method 2600 for scaling-out accelerator kernel resources to heterogeneous accelerator devices. As stated, the orchestrator server 1616 may scale-out a workload (e.g., expand kernel-to-kernel workload tasks to additional accelerator devices) across multiple accelerator devices. In some cases, however, the orchestrator server 1616 may be unable to identify available accelerator devices of a desired type (e.g., unable to identify an FGPA in the system 1600 that is available). In other cases, it may be more desirable to provision a kernel workload onto an accelerator device of a given type (e.g., a GPU) over another type (e.g., an FPGA). For example, an Intel Architecture (IA) device includes an AES-NI instruction. Instead of provisioning a FPGA that can perform AES, provisioning an IA core that can communicate on via inter-kernel communication channels can provide AES services on a relatively faster kernel-to-kernel line rate.

As shown, the method 2600 begins in block 2602, in which the orchestrator server 1616 detects a trigger to initiate a scale-out operation of one or more kernels associated with a workload. An example trigger includes a determination that resource usage in a given accelerator device or sled is relatively high. Another example trigger includes a determination that power consumption of a given accelerator sled is relatively high.

In block 2604, the orchestrator server 1616 determines, as a function of a policy (e.g., a SLA, QoS requirements, a load balancing policy, user-defined specifications in an application associated with the workload, etc.), one or more accelerator devices. Each accelerator device may correspond to one of multiple types (e.g., an FPGA, VPU, ASIC, GPU, etc.). Further, in block 2606, the orchestrator server 1616 may determine a configuration of accelerator devices to satisfy one or more QoS requirements, in which the configuration specifies accelerator devices of differing types.

In block 2608, the orchestrator server 1616 migrates one or more of the accelerator kernels associated with the workload to the accelerator devices identified in the configuration. For instance, to do so, in block 2610, the orchestrator server 1616 generates, from each kernel to be scaled-out to a given accelerator device, a corresponding kernel bit stream that is compatible with the accelerator device. For example, a kernel may be created using the OpenCL framework, which allows the kernel to be compiled into a bit stream compatible with a desired device. In block 2612, the orchestrator server 1616 configures the kernel bit streams on the accelerator devices. For example, to do so, the orchestrator server 1616 may program a slot in which the kernel, via the bit stream, performs the workload tasks. In block 2614, the orchestrator server 1616 initializes inter-kernel communication channels between the kernels associated with the workload. Doing so allows the kernels associated with the workload to send data to one another. Further, because the scale-out operation may affect the composition of a node in the system 1600, the orchestrator server 1616 may, in block 2616, update a managed node registry reflecting the change made by the scale-out operation.

## Claims

1. An orchestrator server (1616) comprising:
circuitry (1617) to:
monitor resource usage of an accelerator kernel configured on a source accelerator device;
determine whether the resource usage exceeds a threshold specified in one or more policies;
upon a determination that the resource usage exceeds the threshold, identify a target accelerator device to which to migrate the accelerator kernel; and
migrate the accelerator kernel from the source accelerator device to the target accelerator device,
wherein the circuitry (1617) is further to:
monitor a power consumption of a source accelerator sled having one or more accelerator devices executing a workload relative to a power threshold specified in the one or more policies; and
upon a determination that the power consumption threshold is exceeded, scale-out the workload to one or more accelerator devices on a target accelerator sled such that the workload currently executing on the source accelerator sled is re-provisioned on to one or more additional accelerator sleds,
wherein to scale-out the workload to the one or more accelerator devices on the target accelerator sled comprises to migrate the workload from one or more of the accelerator devices of the source accelerator sled to the one or more accelerator devices of the target accelerator sled.

2. The orchestrator server (1616) of claim 1, wherein to migrate the accelerator kernel from the source accelerator device to the target accelerator device comprises to cause the source accelerator device to:
suspend operation of the accelerator kernel on the source accelerator device;
serialize data associated with the operation of the accelerator kernel;
migrate, by the source accelerator device to the target accelerator device, the accelerator kernel; and
deserialize the data associated with the operation of the accelerator kernel on the target accelerator device.

3. The orchestrator server (1616) of claim 1, wherein to scale-out the workload to the one or more accelerator devices on the target accelerator sled further comprises to update a registry of managed nodes of a system including the orchestrator server.

4. The orchestrator server (1616) of claim 1 or 3, wherein to scale-out the workload to the one or more accelerator devices on the target accelerator sled comprises to migrate the workload from one or more accelerator sleds to one or more instances of an accelerator device on the target accelerator sled.

5. The orchestrator server (1616) of one of the previous claims, wherein the circuitry (1617) is further to receive a notification of a completion of a workload by the accelerator sled, the notification specifying one or more accelerator devices performing the workload on the accelerator sled.

6. The orchestrator server (1616) of one of the previous claims, wherein the circuitry (1617) is further to:
receive a notification of available accelerator devices of an accelerator sled;
determine, as a function of an evaluation of resource usage of second accelerator devices currently executing a second workload, whether a fragmenting situation is present in the accelerator devices; and
upon a determination that the fragmentation situation is present, migrate a portion of the workload to one or more of the available accelerator devices.

7. The orchestrator server (1616) of one of the previous claims, wherein the circuitry (1617) is further to:
detect a trigger to initiate a scale-out operation of one or more accelerator kernels associated with a workload;
determine, as a function of the one or more policies, one or more types of accelerator devices to which to scale-out the one or more accelerator kernels;
generate, from each accelerator kernel to be scaled-out to an accelerator device of a given type, a bit stream compatible for a corresponding type of accelerator device;
configure, for each accelerator kernel, the bit stream on the accelerator device of the corresponding type;
initializing communication channels between each of the accelerator kernels associated with the workload;
update a registry of managed nodes in a system including the orchestrator of the migration;
register, for each migrated accelerator kernel, a specified interval for a heartbeat notification to be sent to the orchestrator server by the migrated accelerator kernel.

8. A method comprising:
monitoring (2102), by an orchestrator server, resource usage of an accelerator kernel configured on a source accelerator device;
determining (2106), by the orchestrator server, whether the resource usage exceeds a threshold specified in one or more policies;
identifying (2108), by the orchestrator server and upon a determination that the resource usage exceeds the threshold, a target accelerator device to which to migrate the accelerator kernel; and
migrating (2208), by the orchestrator server, the accelerator kernel from the source accelerator device to the target accelerator device,
wherein the method further comprises:
monitoring (2302) a power consumption of a source accelerator sled having one or more accelerator devices executing a workload relative to a power threshold specified in the one or more policies; and
upon a determination that the power consumption threshold is exceeded, scaling-out (2310) the workload to one or more accelerator devices on a target accelerator sled such that the workload currently executing on the source accelerator sled is re-provisioned on to one or more additional accelerator sleds,
wherein scaling-out the workload to the one or more accelerator devices on the target accelerator sled comprises migrating the workload from one or more of the accelerator devices of the source accelerator sled to the one or more accelerator devices of the target accelerator sled.

9. The method of claim 8, wherein migrating the accelerator kernel from the source accelerator device to the target accelerator device comprises:
suspending, by the source accelerator, operation of the accelerator kernel on the source accelerator device;
serializing, by the source accelerator, data associated with the operation of the accelerator kernel;
migrating, by the source accelerator device and to the target accelerator device, the accelerator kernel; and
deserializing, by the source accelerator, the data associated with the operation of the accelerator kernel on the target accelerator device.

10. One or more machine-readable storage media comprising a plurality of instructions stored thereon that, when executed, cause an orchestrator server to perform the method of any of claims 8-9.

## Patentansprüche

1. Orchestrator-Server (1616), der Folgendes umfasst:
eine Schaltungsanordnung (1617) zum:
Überwachen der Betriebsmittelnutzung eines Beschleunigerkerns, der auf einer Ursprungs-Beschleunigervorrichtung konfiguriert ist;
Bestimmen, ob die Betriebsmittelnutzung einen in einer oder mehreren Richtlinien spezifizierten Schwellenwert überschreitet;
Identifizieren einer Ziel-Beschleunigervorrichtung, auf die der Beschleunigerkern migriert werden soll, wenn bestimmt wird, dass die Betriebsmittelnutzung den Schwellenwert überschreitet; und
Migrieren des Beschleunigerkerns von der Ursprungs-Beschleunigervorrichtung auf die Ziel-Beschleunigervorrichtung,
wobei die Schaltungsanordnung (1617) ferner dient zum:
Überwachen des Leistungsverbrauchs eines Ursprungs-Beschleunigerschlittens, der ein oder mehrere Beschleunigervorrichtungen aufweist, die eine Arbeitslast ausführen, im Verhältnis zu einem in der einen oder den mehreren Richtlinien spezifizierten Leistungsschwellenwert; und
Skalieren der Arbeitslast auf eine oder mehrere Beschleunigervorrichtungen auf einem Ziel-Beschleunigerschlitten, wenn bestimmt wird, dass der Schwellenwert für den Leistungsverbrauch überschritten ist, so dass die Arbeitslast, die derzeit auf dem Ursprungs-Beschleunigerschlitten ausgeführt wird, auf einem oder mehreren zusätzlichen Beschleunigerschlitten neu bereitgestellt wird,
wobei das Skalieren der Arbeitslast auf die eine oder die mehreren Beschleunigervorrichtungen auf dem Ziel-Beschleunigerschlitten das Migrieren der Arbeitslast von einer oder mehreren der Beschleunigervorrichtungen des Ursprungs-Beschleunigerschlittens auf die eine oder die mehreren Beschleunigervorrichtungen des Ziel-Beschleunigerschlittens umfasst.

2. Orchestrator-Server (1616) nach Anspruch 1, wobei das Migrieren des Beschleunigerkerns von der Ursprungs-Beschleunigervorrichtung zu der Ziel-Beschleunigervorrichtung umfasst, die Ursprungs-Beschleunigervorrichtung zu veranlassen zum:
Unterbrechen des Betriebs des Beschleunigerkerns auf der Ursprungs-Beschleunigervorrichtung;
Serialisieren von dem Betrieb des Beschleunigerkerns zugeordneten Daten;
Migrieren des Beschleunigerkerns durch die Ursprungs-Beschleunigervorrichtung auf die Ziel-Beschleunigervorrichtung; und
Deserialisieren der dem Betrieb des Beschleunigerkerns zugeordneten Daten auf der Ziel-Beschleunigervorrichtung.

3. Orchestrator-Server (1616) nach Anspruch 1, wobei das Skalieren der Arbeitslast auf die eine oder die mehreren Beschleunigervorrichtungen auf dem Ziel-Beschleunigerschlitten ferner das Aktualisieren einer Eintragung gemanagter Knoten eines Systems, das den Orchestrator-Server enthält, umfasst.

4. Orchestrator-Server (1616) nach Anspruch 1 oder 3, wobei das Skalieren der Arbeitslast auf die eine oder die mehreren Beschleunigervorrichtungen auf dem Ziel-Beschleunigerschlitten das Migrieren der Arbeitslast von einem oder mehreren Beschleunigerschlitten auf eine oder mehrere Instanzen einer Beschleunigervorrichtung auf dem Ziel-Beschleunigerschlitten umfasst.

5. Orchestrator-Server (1616) nach einem der vorhergehenden Ansprüche, wobei die Schaltungsanordnung (1617) ferner dazu dient, eine Benachrichtigung über die Fertigstellung einer Arbeitslast durch den Beschleunigerschlitten zu empfangen, wobei die Benachrichtigung eine oder mehrere Beschleunigervorrichtungen, die die Arbeitslast auf dem Beschleunigerschlitten ausführen, spezifiziert.

6. Orchestrator-Server (1616) nach einem der vorhergehenden Ansprüche, wobei die Schaltungsanordnung (1617) ferner dient zum:
Empfangen einer Benachrichtigung über verfügbare Beschleunigervorrichtungen eines Beschleunigerschlittens;
Bestimmen, als eine Funktion einer Bewertung der Betriebsmittelnutzung zweiter Beschleunigervorrichtungen, die derzeit eine zweite Arbeitslast ausführen, ob in den Beschleunigervorrichtungen eine fragmentierende Situation vorhanden ist; und
Migrieren eines Abschnitts der Arbeitslast auf eine oder mehrere der verfügbaren Beschleunigervorrichtungen, wenn bestimmt wird, dass die Fragmentierungssituation vorliegt.

7. Orchestrator-Server (1616) nach einem der vorhergehenden Ansprüche, wobei die Schaltungsanordnung (1617) ferner dient zum:
Detektieren eines Triggers, um eine Skalierungsoperation eines oder mehrerer Beschleunigerkerne, die einer Arbeitslast zugeordnet sind, einzuleiten;
Bestimmen in Abhängigkeit von der einen oder den mehreren Richtlinien eines oder mehrerer Typen von Beschleunigervorrichtungen, auf die der eine oder die mehreren Beschleunigerkerne skaliert werden sollen;
Erzeugen aus jedem Beschleunigerkern, der auf eine Beschleunigervorrichtung eines gegebenen Typs skaliert werden soll, eines Bitstroms, der mit dem entsprechenden Typ der Beschleunigervorrichtung kompatibel ist;
Konfigurieren für jeden Beschleunigerkern des Bitstroms auf der Beschleunigervorrichtung des entsprechenden Typs;
Initialisieren von Kommunikationskanälen zwischen jedem der der Arbeitslast zugeordneten Beschleunigerkerne;
Aktualisieren einer Eintragung gemanagter Knoten in einem System, das den Orchestrator der Migration enthält;
Registrieren für jeden migrierten Beschleunigerkern eines spezifizierten Intervalls für eine Heartbeat-Benachrichtigung, die durch den migrierten Beschleunigerkern an den Orchestrator-Server zu senden ist.

8. Verfahren, das Folgendes umfasst:
Überwachen (2102) durch einen Orchestrator-Server der Betriebsmittelnutzung eines Beschleunigerkerns, der auf einer Ursprungs-Beschleunigervorrichtung konfiguriert ist;
Bestimmen (2106) durch den Orchestrator-Server ob die Betriebsmittelnutzung einen in einer oder mehreren Richtlinien spezifizierten Schwellenwert überschreitet;
Identifizieren (2108) einer Ziel-Beschleunigervorrichtung, auf die der Beschleunigerkern migriert werden soll, durch den Orchestrator-Server, wenn bestimmt wird, dass die Betriebsmittelnutzung den Schwellenwert überschreitet; und
Migrieren (2208) durch den Orchestrator-Server des Beschleunigerkerns von der Ursprungs-Beschleunigervorrichtung auf die Ziel-Beschleunigervorrichtung,
wobei das Verfahren ferner Folgendes umfasst:
Überwachen (2302) des Leistungsverbrauchs eines Ursprungs-Beschleunigerschlittens, der ein oder mehrere Beschleunigervorrichtungen aufweist, die eine Arbeitslast ausführen, im Verhältnis zu einem in der einen oder den mehreren Richtlinien spezifizierten Leistungsschwellenwert; und
Skalieren (2310) der Arbeitslast auf eine oder mehrere Beschleunigervorrichtungen auf einem Ziel-Beschleunigerschlitten, wenn bestimmt wird, dass der Schwellenwert für den Leistungsverbrauch überschritten ist, so dass die Arbeitslast, die derzeit auf dem Ursprungs-Beschleunigerschlitten ausgeführt wird, auf einem oder mehreren zusätzlichen Beschleunigerschlitten neu bereitgestellt wird,
wobei das Skalieren der Arbeitslast auf die eine oder die mehreren Beschleunigervorrichtungen auf dem Ziel-Beschleunigerschlitten das Migrieren der Arbeitslast von einer oder mehreren der Beschleunigervorrichtungen des Ursprungs-Beschleunigerschlittens auf die eine oder die mehreren Beschleunigervorrichtungen des Ziel-Beschleunigerschlittens umfasst.

9. Verfahren nach Anspruch 8, wobei das Migrieren des Beschleunigerkerns von der Ursprungs-Beschleunigervorrichtung auf die Ziel-Beschleunigervorrichtung Folgendes umfasst:
Unterbrechen des Betriebs des Beschleunigerkerns auf der Ursprungs-Beschleunigervorrichtung durch den Ursprungs-Beschleuniger;
Serialisieren von dem Betrieb des Beschleunigerkerns zugeordneten Daten durch den Ursprungs-Beschleuniger;
Migrieren des Beschleunigerkerns durch die Ursprungs-Beschleunigervorrichtung auf die Ziel-Beschleunigervorrichtung; und
Deserialisieren der dem Betrieb des Beschleunigerkerns zugeordneten Daten auf der Ziel-Beschleunigervorrichtung durch den Ursprungs-Beschleuniger.

10. Ein oder mehrere maschinenlesbare Speichermedien, die mehrere darauf gespeicherte Anweisungen umfassen, die dann, wenn sie ausgeführt werden, einen Orchestrator-Server veranlassen, das Verfahren nach einem der Ansprüche 8-9 auszuführen.

## Revendications

1. Serveur orchestrateur (1616), comprenant :
une circuiterie (1617) conçue pour :
surveiller une utilisation en ressources d'un noyau accélérateur configuré sur un dispositif accélérateur source ;
déterminer si l'utilisation en ressources dépasse ou non un seuil spécifié dans une ou plusieurs politiques ;
en cas de détermination que l'utilisation en ressources dépasse le seuil, identifier un dispositif accélérateur cible vers lequel faire migrer le noyau accélérateur ; et
faire migrer le noyau accélérateur depuis le dispositif accélérateur source vers le dispositif accélérateur cible,
la circuiterie (1617) étant conçue en outre pour :
surveiller une consommation d'énergie d'un traineau accélérateur source pourvu d'un ou de plusieurs dispositifs accélérateurs exécutant une charge de travail par rapport à un seuil d'énergie spécifié dans les une ou plusieurs politiques ; et
en cas de détermination que le seuil de consommation d'énergie est dépassé, distribuer horizontalement la charge de travail sur un ou plusieurs dispositifs accélérateurs sur un traineau accélérateur cible de façon à reprovisionner la charge de travail s'exécutant actuellement sur le traineau accélérateur source vers un ou plusieurs traineaux accélérateurs additionnels,
la distribution horizontale de la charge de travail sur les un ou plusieurs dispositifs accélérateurs sur le traineau accélérateur cible comprenant la migration de la charge de travail depuis un ou plusieurs des dispositifs accélérateurs du traineau accélérateur source vers les un ou plusieurs dispositifs accélérateurs du traîneau accélérateur cible.

2. Serveur orchestrateur (1616) selon la revendication 1, dans lequel la migration du noyau accélérateur depuis le dispositif accélérateur source vers le dispositif accélérateur cible comprend la commande au dispositif accélérateur source de :
suspendre le fonctionnement du noyau accélérateur sur le dispositif accélérateur source ;
sérialiser des données associées au fonctionnement du noyau accélérateur ;
faire migrer, par le dispositif accélérateur source vers le dispositif accélérateur cible, le noyau accélérateur ; et
désérialiser les données associées au fonctionnement du noyau accélérateur sur le dispositif accélérateur cible.

3. Serveur orchestrateur (1616) selon la revendication 1, dans lequel la distribution horizontale de la charge de travail sur les un ou plusieurs dispositifs accélérateurs sur le traineau accélérateur cible comprend en outre la mise à jour d'un registre de noeuds gérés d'un système comportant le serveur orchestrateur.

4. Serveur orchestrateur (1616) selon la revendication 1 ou 3, dans lequel la distribution horizontale de la charge de travail sur les un ou plusieurs dispositifs accélérateurs sur le traineau accélérateur cible comprend la migration de la charge de travail depuis un ou plusieurs traineaux accélérateurs vers une ou plusieurs instances d'un dispositif accélérateur sur le traineau accélérateur cible.

5. Serveur orchestrateur (1616) selon l'une des revendications précédentes, dans lequel la circuiterie (1617) est conçue en outre pour recevoir une notification d'un accomplissement d'une charge de travail par le traineau accélérateur, la notification spécifiant un ou plusieurs dispositifs accélérateurs réalisant la charge de travail sur le traineau accélérateur.

6. Serveur orchestrateur (1616) selon l'une des revendications précédentes, dans lequel la circuiterie (1617) est conçue en outre pour :
recevoir une notification de dispositifs accélérateurs disponibles d'un traîneau accélérateur ;
déterminer, en fonction d'une évaluation d'utilisation en ressources de deuxièmes dispositifs accélérateurs exécutant actuellement une deuxième charge de travail, si une situation de fragmentation se produit ou non dans les dispositifs accélérateurs ; et
en cas de détermination que la situation de fragmentation se produit, faire migrer une partie de la charge de travail vers un ou plusieurs des dispositifs accélérateurs disponibles.

7. Serveur orchestrateur (1616) selon l'une des revendications précédentes, dans lequel la circuiterie (1617) est conçue en outre pour :
détecter un déclencheur pour amorcer une opération de distribution horizontale d'un ou de plusieurs noyaux accélérateurs associés à une charge de travail ;
déterminer, en fonction des une ou plusieurs politiques, un ou plusieurs types de dispositifs accélérateurs vers lesquels distribuer horizontalement les un ou plusieurs noyaux accélérateurs ;
générer, à partir de chaque noyau accélérateur à distribuer horizontalement vers un dispositif accélérateur d'un type donné, un train de bits compatible pour un type correspondant de dispositif accélérateur ;
configurer, pour chaque noyau accélérateur, le train de bits sur le dispositif accélérateur du type correspondant ;
initialiser des canaux de communication entre chacun des noyaux accélérateurs associés à la charge de travail ;
mettre à jour un registre de noeuds gérés dans un système comportant l'orchestrateur de la migration ;
enregistrer, pour chaque noyau accélérateur ayant migré, un intervalle spécifié pour une notification battement de coeur à envoyer au serveur orchestrateur par le noyau accélérateur ayant migré.

8. Procédé, comprenant :
la surveillance (2102), par un serveur orchestrateur, d'une utilisation en ressources d'un noyau accélérateur configuré sur un dispositif accélérateur source ;
la détermination (2106), par le serveur orchestrateur, si l'utilisation en ressources dépasse ou non un seuil spécifié dans une ou plusieurs politiques ;
l'identification (2108), par le serveur orchestrateur et en cas de détermination que l'utilisation en ressources dépasse le seuil, d'un dispositif accélérateur cible vers lequel faire migrer le noyau accélérateur ; et
la migration (2208), par le serveur orchestrateur, du noyau accélérateur depuis le dispositif accélérateur source vers le dispositif accélérateur cible,
le procédé comprenant en outre :
la surveillance (2302) d'une consommation d'énergie d'un traineau accélérateur source pourvu d'un ou de plusieurs dispositifs accélérateurs exécutant une charge de travail par rapport à un seuil d'énergie spécifié dans les une ou plusieurs politiques ; et
en cas de détermination que le seuil de consommation d'énergie est dépassé, la distribution horizontale (2310) de la charge de travail sur un ou plusieurs dispositifs accélérateurs sur un traineau accélérateur cible de façon à reprovisionner la charge de travail s'exécutant actuellement sur le traineau accélérateur source vers un ou plusieurs traineaux accélérateurs additionnels,
la distribution horizontale de la charge de travail sur les un ou plusieurs dispositifs accélérateurs sur le traineau accélérateur cible comprenant la migration de la charge de travail depuis un ou plusieurs des dispositifs accélérateurs du traineau accélérateur source vers les un ou plusieurs dispositifs accélérateurs du traîneau accélérateur cible.

9. Procédé selon la revendication 8, dans lequel la migration du noyau accélérateur depuis le dispositif accélérateur source vers le dispositif accélérateur cible comprend :
la suspension, par le dispositif accélérateur source, du fonctionnement du noyau accélérateur sur le dispositif accélérateur source ;
la sérialisation, le dispositif accélérateur source, de données associées au fonctionnement du noyau accélérateur ;
la migration, par le dispositif accélérateur source et vers le dispositif accélérateur cible, du noyau accélérateur ; et
la désérialisation, le dispositif accélérateur source, des données associées au fonctionnement du noyau accélérateur sur le dispositif accélérateur cible.

10. Support(s) de stockage lisible(s) par machine sur le(s)quel(s) sont stockées une pluralité d'instructions qui, lorsqu'elles sont exécutées, amènent un serveur orchestrateur à réaliser le procédé selon l'une quelconque des revendications 8 à 9.
